# EUROPÄISCHE PATENTSCHRIFT

(11) **EP 3 552 141 B1**
(45) Veröffentlichungstag und Bekanntmachung des Hinweises auf die Patenterteilung: **22.03.2023**
(21) Anmeldenummer: 17828662.1
(22) Anmeldetag: 05.12.2017
(51) Int. Cl.: G06F 21/62

(54) **SERVER-COMPUTERSYSTEM ZUR BEREITSTELLUNG VON DATENSÄTZEN**
SERVER COMPUTER SYSTEM FOR PROVIDING DATASETS
SYSTÈME DE SERVEUR DE TYPE ORDINATEUR DESTINÉ À FOURNIR DES ENSEMBLES DE DONNÉES

(30) Priorität: 08.12.2016 DE 102016224470
(43) Veröffentlichungstag der Anmeldung: 16.10.2019
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE); BACKHAUS, Michael, 30659 Hannover (DE); PALM, Peter, 30916 Isernhagen (DE)
(74) Vertreter: Richardt Patentanwälte PartG mbB
(86) Internationale Anmeldenummer: PCT/EP2017/081463
(87) Internationale Veröffentlichungsnummer: WO 2018/104275

(56) Entgegenhaltungen:
- DE-A1-102010 043 265
- US-A1- 2005 198 070
- US-A1- 2006 248 039

## Beschreibung

### Technisches Gebiet

Die vorliegenden Darstellungen betreffen IT-Systeme und insbesondere die Bereitstellung von Datensätzen durch Server-Computersysteme.

### Stand der Technik

Die Speicherung von Daten in einer Weise, dass diese für ein oder mehrere Nutzer schnell und verlässlich, also in hochverfügbarer Weise, bereitstehen, erfordert oftmals eine komplexe, durch redundante Komponenten mehrfach vor Ausfall abgesicherte IT-Infrastruktur sowie leistungsfähige und damit Teure Hardwarekomponenten die eine Vielzahl von Anfragen parallel bedienen können. Die Einrichtung und der Betrieb einer solchen Infrastruktur ist aufwändig und teuer und damit oftmals nur für sehr große Unternehmen eine Option. Kleine und mittelständische Unternehmen sowie Privatnutzer machen daher oftmals Abstriche bezüglich der Qualität oder Verlässlichkeit der Verfügbarkeit der Daten oder lagern ihre Daten in Cloudspeicherdienste aus.

Für sensible, sicherheitskritische Daten ist dies aber oftmals aus mehreren Gründen problematisch: zum einen befinden sich die Server der Clouddienste oftmals im Ausland sodass die Aufklärung und Verfolgung des Datendiebstahls dort sowohl in juristischer wie praktischer Hinsicht schwierig ist. Zum anderen birgt auch die Auslagerung von Daten an inländische Cloudspeicherdienste inhärente Risiken. So könnte sich etwa das technisch-administrative Personal des Clouddiensts Zugang zu den Daten verschaffen und diese an Dritte weitergeben. Gerade bei hochsensiblen Daten wie etwa Gesundheitsdaten, Steuerdaten, Daten die die innere Sicherheit eines Landes betreffen und ähnliches muss eine Weitergabe an Dritte durch das technische Personal des Cloud-Dienstes wirksam verhindert werden.

Aus dem Stand der Technik sind verschiedene Ansätze zur sicheren Speicherung von Daten auf Cloud-Diensten bekannt. Ein Ansatz ist die Speicherung von Daten in der Cloud in verschlüsselter Form. Dieser Ansatz hat jedoch den Nachteil, dass die Daten nicht mehr mit den üblichen Suchbegriffen durchsucht werden können und eine Erzeugung eines durchsuchbaren Index auf verschlüsselten Daten ebenfalls nicht möglich ist. Das heißt in der Praxis, dass ein Clouddienst oftmals nur als reiner Backup-Dienst genutzt werden kann, welcher verschlüsselte Dateien in ihrer Gesamtheit in der Funktion eines Backups vorhält, aber nicht in der Lage ist, gezielt einzelne Datensätze dieser Daten unter Hochlastbedingungen für eine Vielzahl von Clients in Abhängigkeit von clientspezifischen Anforderungen bereitzustellen.

Die Patentanmeldung DE 102010043265 A1 beschreibt ein computerimplementiertes Verfahren zum Indizieren von Daten zur Verwendung durch mehrere Anwendungen. Das Verfahren umfasst das Empfangen eines Datenobjekts in einer ersten Anwendung von mehreren Anwendungen und das Tokenisieren eines Datenobjekts gemeinsamer Form, um Token aus dem Datenobjekt zu extrahieren und einen Index der aus dem Datenobjekt extrahierten Token zu erzeugen. Der Index wird formatiert, um durch jede der mehreren Anwendungen benutzt zu werden. Das Verfahren kann ferner das Speichern des Index in einer Datenbank umfassen, die den mehreren Anwendungen zugänglich ist.

### Technisches Problem und grundlegende Lösungen

Mit den bekannten Clouddiensten bzw. Server-Computersystemen ist es oftmals nicht möglich, Datensätze so auf dem Server-Computersystem zu speichern, dass sie gleichzeitig sicher vor dem Zugriff durch Dritte oder durch das administrativtechnische Personal sind und andererseits einzelnen Clients gezielt einzeln zur Verfügung gestellt werden können. Vor diesem Hintergrund besteht ein Bedarf an verbesserten Verfahren zur Bereitstellung von Datensätzen durch Server-Computersysteme an Client-Computersysteme und entsprechende Server-Computersysteme welche die vorangehend erwähnten Nachteile zumindest teilweise vermeiden.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein computerimplementiertes Verfahren zur Bereitstellung von Datensätzen. Das Verfahren umfasst:
- Speicherung einer Vielzahl von Datensätzen in einzeln verschlüsselter Form auf ein Speichermedium eines Server-Computersystems, wobei das Server-Computersystem keinen Zugriff auf die Datensätze in unverschlüsselter Form und keinen Zugriff auf Mittel zur Entschlüsselung der Datensätze besitzt, wobei jeder der unverschlüsselten Datensätze ein oder mehrere jeweils in eigenen Feldern gespeicherte Feldwerte beinhaltet;
- Speicherung eines unverschlüsselten Index auf das Speichermedium durch das Server-Computersystem, wobei der unverschlüsselte Index Token umfasst, die durch Tokenisierung mehrerer der Feldwerte der unverschlüsselten Datensätze erzeugt wurden, wobei jedes der in dem Index enthaltenen Token verknüpft ist mit ein oder mehreren Zeigern auf diejenigen der Datensätze, durch deren Tokenisierung das Token erzeugt wurde, wobei der Index frei ist von Zeigern auf einzelne Felder dieser Datensätzen, die das Token beinhalten;
- Empfang einer Suchanfrage eines Client-Computersystems über ein Netzwerk durch das Server-Computersystem;
- Als Antwort auf die Suchanfrage, Durchführung der angefragten Suche in dem Index durch das Server-Computersystem um ein oder mehrere der Datensätze als Ergebnis der Suche zu identifizieren; und
- Zurückgabe der identifizierten ein oder mehreren Datensätze in verschlüsselter Form an das Client-Computersystem über das Netzwerk.

Dies kann aus mehreren Gründen vorteilhaft sein:
Zum Einen ermöglicht die Verwendung eines durchsuchbaren Index eine schnelle Identifizierung bestimmter einzelner Datensätze die einen Suchwert enthalten. Dadurch, dass die Datensätze einzeln verschlüsselt sind und der Index auf die einzelnen Datensätze referenziert ist es möglich, in dem Index schnell diejenigen Datensätze zu identifizieren, die den Suchwert enthalten und nur diese gezielt an das anfragende Client-Computersystem zurückzugeben.

Dennoch sind die Daten auf dem Server-Computersystem vor unberechtigtem Zugriff geschützt: die Datensätze selbst, die sensible personenbezogene Informationen beinhalten können, sind so verschlüsselt, dass das Server-Computersystem diese nicht selbst entschlüsseln kann. Lediglich der Index liegt in unverschlüsselter Form vor, kann also mit den üblichen natürlichsprachigen Suchbegriffen durchsucht werden.

Auch der Index ist so ausgebildet dass er keine Rekonstruktion der indizierten Daten erlaubt und somit den Inhalt der Datensätze durch seine spezielle Struktur schützt. Sogar falls dieser Index also z.B. durch Datendiebstahl in die Hände unberechtigter Dritter gelangen sollte, gibt er deutlich weniger an potentiell sensiblen Informationen preis als dies bei herkömmlichen Datenbankindices der Fall ist. Insbesondere ist der Index frei von Zeigern auf die einzelnen Felder (z.B. Tabellenspalten) von welchen die Feldwerte stammen, die tokenisiert und in Form von Token indiziert wurden.

Somit erlauben Ausführungsformen der Erfindung, Datensätze so auf einem Server-Computersystem, z.B. einem Server-Computersystem eines Clouddienstes, zu speichern, dass der Inhalt der Datensätze vor dem Zugriff unberechtigter Dritter geschützt ist, aber dennoch ein Index verwendet werden kann um einzelne Datensätze schnell und gezielt zu identifizieren, die auf eine bestimmte Suchanfrage "passen", und nur diese zurückzugeben. Es kann serverseitig zudem auf rechenintensive oder organisatorisch aufwändige Sicherheitsvorkehrungen verzichtet werden um sicherzustellen dass nur berechtigte Client-Systeme auf die Datensätze bzw. den Index zugreifen können, denn ohne einen geeigneten Entschlüsselungsschlüssel wird das Client-Computersystem nicht auf den Inhalt eines erhaltenen Datensatzes zugreifen können. Der Index enthält keine Information im Hinblick auf den Typ der Felder aus welchem die indizierten Token stammen und enthält damit keine Information über die semantische Bedeutung der einzelnen Token (also darüber ob eine bestimmte indizierte Zahl eine Ausweisnummer, ein Geburtsdatum, ein Zertifikatscode, ein Rabattgutscheincode oder ein sonstiger Datenwert ist.

Nach Ausführungsformen beinhaltet die Suchanfrage einen Suchwert. Der Suchwert kann z.B. ein Wort wie "Max Mustermann", eine Zahl wie "23529727", ein spezielles Datenformat zur Spezifikation eines Bildelements oder eines biometrischen Merkmals oder sonstiger Information sein die zu dem Datenformat passt welches von der Tokenisierungslogik bei der Generierung der Token für den Index verwendet wurde. Die Durchführung der angefragten Suche umfasst:
- Durchsuchen des Index nach dem Suchwert;
- Identifizierung eines indizierten Tokens innerhalb des Index, welches identisch ist zu dem Suchwert;
- Analyse von Datensatz-Zeigern, die in dem Index mit dem identifizierten Token verknüpft gespeichert sind, um ein oder mehrere der Datensätze zu identifizieren, welche ein oder mehrere Feldwerte beinhalten, aus welchen das indizierte Token erzeugt wurde, wobei die identifizierten Datensätze zurückgegeben werden.

Dies kann vorteilhaft sein da somit der Index über die Zeiger der Token zwar eine Identifikation der (verschlüsselten und unverschlüsselten) Datensätze, die ein bestimmtes Token mindestens einmal in mindestens einem ihrer Feldwerte enthalten, erlaubt, nicht aber eine Rekonstruktion der (Feld)struktur der Datensätze.

Nach Ausführungsformen umfasst das Verfahren ein Bereitstellen eines DBMS, das dazu konfiguriert ist, die Datensätze in unverschlüsselter Form jeweils als eine Menge aus mehreren Feldwerten strukturiert zu speichern. Die Feldwerte werden jeweils in einem eigenen Feld gespeichert. Die Felder jedes der Datensätze gehören mindestens zwei unterschiedlichen Feldtypen an. Beispielsweise kann das DBMS durch das Client-Computersystem bereitgestellt werden. Beispielsweise kann es eine Vielzahl von Client-Computersystemen geben, die alle dazu ausgebildet sind, Suchanfragen an das Server-Computersystem zu senden, von welchen aber nur eines das DBMS mit den unverschlüsselten Datensätzen enthält. Dieses eine Client-Computersystem beinhaltet zudem eine Tokenisierungslogik zur Generierung der Token und zur Generierung des Index aus den Token, sowie entsprechende Module oder Programme zur Verschlüsselung von Datensätzen und Index und zur Übermittlung der verschlüsselten Datensätze und des verschlüsselten Index an das Server-Computersystem. Es ist auch möglich dass dieses eine Client-Computersystem nur die Indexstruktur und die verschlüsselten Datensätze an das Server-Computersystem bereitstellt und selbst keine Suchanfragen an das Server-Computersystem sendet.

Nach Ausführungsformen hat das Client-Computersystem ferner Zugriff auf die unverschlüsselten Datensätze. Das Verfahren umfasst:
- Erzeugung der verschlüsselten Datensätze durch das Client-Computersystem, wobei die Datensätze jeweils einzeln so verschlüsselt werden, dass das Client-Computersystem diese wieder entschlüsseln kann, nicht jedoch das Server-Computersystem;
- Generierung einer ersten Instanz des Index durch das Client-Computersystem durch Tokenisierung der Feldwerte mehrerer Datenfelder der unverschlüsselten Datensätze;
- Verschlüsselung der ersten Instanz des Index mit einem öffentlichen Schlüssel des Server-Computers durch das Client-Computersystem um einen verschlüsselten Index zu generieren;
- Senden der verschlüsselten Datensätze und des verschlüsselten Index von dem Client- Computersystem an das Server- Computersystem über das Netzwerk.

Bei dem Client-Computersystem kann es sich zum Beispiel um ein Computersystem eines mittelständischen Betriebs oder einer Privatperson handeln auf welchem sensible Daten in Datensätzen in unverschlüsselter Form gespeichert sind, die von einem DBMS verwaltet werden. Das Clientsystem ist also ein als vertraulich anzusehendes Rechensystem in welchem die darin verwalteten und ggf. erstmals generierten Datensätze besonders sicher vor Weitergabe der Daten sind, beispielsweise weil nur ein bestimmter Nutzer auf das Client-System zugreifen darf dem vertraut wird (z.B. dem Besitzer des Rechners der in der Regel auch die auf diesem gespeicherten Daten erstellt hat) oder weil hier besonders hohe Schutzvorkehrungen zur Verhinderung des Zugriffs Dritter auf die unverschlüsselten Datensätze vorherrschen. Vorzugsweise sind die technischen Vorkehrungen zum Schutz der unverschlüsselten Datensätze selektiv nur auf demjenigen Client-Computersystem vorhanden, welches die unverschlüsselten Datensätze enthält, nicht jedoch auf denjenigen Client-Computersystemen die nur Suchanfrage an das Computersystem senden.

Nach Ausführungsformen umfasst das Verfahren ferner folgende durch das Server-Computersystem ausgeführte Schritte:
- Empfang des verschlüsselten Index von dem Client-Computersystem;
- Empfang des verschlüsselten Datensätze von dem Client-Computersystem;
- Entschlüsselung des verschlüsselten Index mittels eines privaten Schlüssels des Server-Computers zur Bereitstellung des unverschlüsselten Index, wobei der private Schlüssel und der öffentliche Schlüssel des Server-Computers ein asymmetrisches kryptographisches Schlüsselpaar bilden;
- Speichern der verschlüsselten Datensätze (ohne dass das Server- Computersystem diese entschlüsseln kann).

Nach Ausführungsformen beinhaltet das Server-Computersystem eine Schnittstelle, die es einem Client-Computersystem und optional einer Vielzahl weiterer Client-Computersysteme ermöglicht, eine Suchanfrage an das Server-Computersystem zu senden und dadurch das Server-Computersystem zu veranlassen, bei der Verarbeitung der Suchanfrage auf den entschlüsselten Index zuzugreifen und ein oder mehreren anhand der Indexsuche identifizierte, verschlüsselten Datensätze über das Netzwerk an das Client-Computersystem, von welchem die Anfrage stammt, zurückzugeben.

Dies kann vorteilhaft sein, da die Verarbeitung von Suchanfragen einer großen Anzahl von Client-Computersystemen an entsprechend leistungsfähige Server-Computersysteme delegiert werden können wie sie etwa Cloudspeicherdienste betreiben, ohne die Vertraulichkeit der Datensätze die im Kontext der Suchanfragen durchsucht und zurückgegeben werden gefährdet ist.

Nach Ausführungsformen empfängt das Client-Computersystem die ein oder mehreren identifizierten und verschlüsselten Datensätze und entschlüsselt die empfangenen verschlüsselten Datensätze. Beispielsweise kann das Client-Computersystem über einen symmetrischen kryptographischen Schlüssel verfügen der sowohl zur Verschlüsselung der Datensätze, die an das Server-Computersystem geliefert werden, als auch zur Entschlüsselung der verschlüsselten Datensätze, die vom Server-Computersystem in Antwort auf eine Suchanfrage zurückgegeben werden, verwendet wird. Dieser geheime symmetrische Schlüssel wird nach manchen Ausführungsformen auch an andere Client-Computersysteme denen vertraut wird weitergegeben um diese dazu in die Lage zu versetzen, Datensätze zu entschlüsseln, die von dem Server-Computersystem als Antwort auf eine Suchanfrage zurückgegeben wurden.

Nach Ausführungsformen umfasst das Verfahren ferner eine Generierung des durchsuchbaren Index, beispielsweise durch das Client-Computersystem das die Suchanfrage an das Server-Computersystem gesendet hat oder ein anderes Computersystem. Die Generierung umfasst:
- Erzeugen von ersten Token aus ersten Feldwerten mehrerer der unverschlüsselten Datensätze, wobei die ersten Feldwerte in ersten der Felder gespeichert sind, wobei die ersten Felder einem ersten Feldtyp angehören;
- Erzeugen von zweiten Token aus zweiten Feldwerten der mehreren unverschlüsselten Datensätze, wobei die zweiten Feldwerte in zweiten der Felder gespeichert sind, wobei die zweiten Felder einem zweiten Feldtyp angehören;
- Erzeugung des durchsuchbaren Index aus zumindest den ersten und zweiten Token, wobei der Ort der Speicherung der ersten und zweiten Token in der Struktur des Index unabhängig davon erfolgt von welchem der Felder die Token stammen.

Dies kann vorteilhaft sein, da gemäß Ausführungsformen der Erfindung einen Suchindex bereitstellt wird, welcher "security by obscurity" für die in ihm indizierten Daten bietet, und dies auch in unverschlüsseltem Zustand.

Bei herkömmlichen Datenbankindices wird je ein Index für den Inhalt einer bestimmten Tabellenspalte generiert. Eine Tabellenspalte repräsentiert dabei oftmals ein bestimmtes Attribut von Datenobjekten, die in der jeweiligen Tabelle gespeichert sind. D.h., klassischerweise kann für eine Tabelle "Angestellte" beispielsweise ein Index für die Spalte "Vorname", ein weiterer Index für die Spalte "Nachname", ein weiterer Index für die Spalte "Position", ein weiterer Index für die Spalte "Geburtsjahr", ein weiterer Index für die Spalte "Personalausweis-ID" usw. erstellt werden. Sollten all diese Indexstrukturen für die Tabelle "Angestellte" in falsche Hände geraten, so ist es für unberechtigte Dritte ein leichtes, anhand der Indexstrukturen die vollständigen Datensätze, die in der Tabelle gespeichert sind, zu rekonstruieren. Da die Felder einzelnen indexiert sind, ist anhand des Indexnamens oder zumindest anhand des Inhalts in der Regel klar ersichtlich, für welche Art von Attributen ein in einem Index gespeicherter Datenwert steht. Sogar für den Fall dass die Tabelle "Angestellte" keine Klarnamen, sondern stattdessen numerische Pseudonyme enthält, wird anhand der Indexstruktur deutlich, dass ein numerischer Wert, der in der Spalte "Name" bzw. "Pseudonym" gespeichert ist, die Funktion eines Identifikators des entsprechenden Datensatzes und nicht einfach ein beliebiges Attribut des Objekts repräsentiert. Beispielsweise verfügen fast alle klassischen, SQL basierten DBMSs über Kommandos, die es einem Nutzer ermöglichen, einen durchsuchbaren Index basierend auf den Daten einer bestimmten Spalte einer bestimmten Datenbanktabelle zu erstellen. Dieser Index kann dazu verwendet werden, die Durchführung von Datenbankabfragen die auf diese Spalte gerichtet sind zu beschleunigen, indem der Index nach einem bestimmten Suchdatenwert durchsucht wird anstatt die Werte der besagten Spalte alle sequenziell zu durchsuchen. Typischerweise wird für die "klassischen" Indices eine Indexstruktur pro Tabellenspalte erstellt. Zu den DBMSs, die die Indexierung einzelner Spalten unterstützen, gehören z.B. MySQL, PostgreSQL, Oracle, SAP Hana und viele mehr. Auch bei nicht-SQL basierten Datenbanksystemen werden Indexstrukturen zum schnellen Suchen und Finden bestimmter Datenwerte verwendet. Klassischerweise wird der Datenwert eines Feldes in seiner Gesamtheit indiziert, also ohne diesen in Teilwerte ("Token") aufzuteilen. Problematisch ist, dass sich aus den "klassischen" Datenbankindizes sensible, personenbezogene Daten rekonstruieren lassen. Beispielsweise können gerade bei umfangreichen Datensätzen verschiedene mustererkennende Algorithmen eingesetzt werden um aus den Indices (auch pseudonymisierter) Datensätze Rückschlüsse auf die Rohdaten zu ziehen, unter anderem auch weil die Herkunft eines Tokens aus einem bestimmten Feld dessen Bedeutungsgehalt offenbart.

Demgegenüber beinhaltet der Index, der gemäß Ausführungsformen der Erfindung erstellt wurde, einen deutlich erhöhten Schutz der in ihm gespeicherten Daten. Dies liegt daran, dass die Feldwerte zumindest einiger der Felder der Datensätze tokenisiert werden. Der generierte Index, der auf diesem Token aufbaut, und der die Token unabhängig von dem Typ des Feldes, von welchen diese stammen, in der Indexstruktur speichert, lässt also keine Rückschlüsse darauf zu, ob ein bestimmtes Token den gesamten Feldwerte repräsentiert oder nur einen Teil davon, und lässt auch keinen Rückschluss darauf zu von welchem Feldtyp es abstammt. Ein bestimmter indizierter Zahlenwert in dem Index kann also gleichermaßen den Geburtstag des Angestellten, ein Erscheinungsdatum eines Artikels, in welchem über den Angestellten berichtet wird, eine ID des Angestellten, eine ID eines Presseartikels, in welchem über den Angestellten berichtet wird, eine Kennung eines Personalausweises, eines Kraftfahrzeugs, eines Geschenk-Gutscheins des Angestellten oder sonst eines beliebigen Attributes sein, welches mit einem bestimmten Objekt/Angestellten in mehr oder weniger enger semantische Beziehung steht.

Ausführungsformen der Erfindung stellen somit einen "chaotischen" bzw. "obfuszierten" Suchindex bereit, der sogar dann, falls er unbeabsichtigterweise an unberechtigte Dritte gelangt, oftmals keinen Rückschluss auf den Inhalt der in diesem indizierten Datensätze zulässt. Sensible Datensätze werden also erst dann semantisch transparent, wenn zusätzlich zu dem Index auch die eigentlichen Datensätze gestohlen werden. Vorzugsweise beinhaltet jeder Datensatz oder zumindest die Mehrzahl aller Datensätze eine Vielzahl von Feldern, von welchen wiederum viele Felder einen Datenwert beinhalten, der sich jeweils in eine Vielzahl unterschiedlicher Token zerlegen lässt. Dadurch kann sichergestellt werden, dass der Sinngehalt der einzelnen Datensätze rein anhand des Index nicht rekonstruiert werden kann, obwohl sämtliche Token, die aus den Feldwerten eines Datensatzes generiert und in dem Index gespeichert wurden, auf den Datensatz, von welchem sie stammen, referenzieren.

Nach Ausführungsformen handelt es sich bei den Datensätzen um pseudonyme Datensätze, die keine Klarnamen von Personen enthalten.

Nach Ausführungsformen der Erfindung umfasst die Erzeugung der ersten Token eine Anwendung einer Tokenisierungslogik auf einen der ersten Feldwerte zur Erzeugung mehrerer der ersten Token aus diesem ersten Feldwert. Die Erzeugung der zweiten Token umfasst eine Anwendung dieser oder einer anderen Tokenisierungslogik auf einen der zweiten Feldwerte zur Erzeugung mehrerer der zweiten Token aus diesem zweiten Feldwert.

Dies kann vorteilhaft sein, da bereits zwei Feldtypen und entsprechende zwei Felder pro Datensatz ausreichen können, um einen hinreichend chaotischen Suchindex zu erzeugen. Beispielsweise kann in einem Feld eines ersten Feldtyps natürlichsprachlicher Text im Json Format gespeichert sein, der viele verschiedene Attribute eines Angestellten wie etwa dessen Alter, Eintrittsdatum in die Firma, Qualifikation, Zeugnisse, Lebenslauf-Daten und ähnliches gespeichert sein. In einem anderen Feld eines zweiten Feldtyp können ebenfalls eine Vielzahl von Daten im Json Format gespeichert sein, welche umfangreiche Angaben bezüglich der Rechte des Angestellten innerhalb des Unternehmens spezifizieren. Beispielsweise könnte das zweite Feld Angaben zu den Gebäuden, Computerprogrammen oder Maschinen beinhalten, für welche ein bestimmter Angestellter Zugriffsrechte oder Nutzungsrechte hat. Sowohl in den Feldwerten der Felder des ersten Feldtyps als auch in den Feldwerten der Felder des zweiten Feldtyps befinden sich numerische Zahlen. Im einen Fall können diese Zahlen Zeitpunkte von Geburtstagen, Zeugnissen und Abschlussprüfungen repräsentieren, im anderen Fall Zugangscodes, Gebäudenummern und Berechtigungsnachweise für sicherheitskritische Anwendungen innerhalb einer Firma, die den Angestellten beschäftigt. Der generierte Index wird also womöglich eine Vielzahl von Zahlen beinhalten, die alle auf einen bestimmten Angestellten/Datensatz referenzieren, ohne dass die Zahlen einem unberechtigten Dritten Informationen dazu liefern, was die Zahlen genau bedeuten.

Die Tokenisierung der Feldwerte sowohl des ersten als auch des zweiten Feldtyps kann dafür sorgen, dass anhand des Index auch nicht ersichtlich ist bzw. darauf geschlossen werden kann, wie groß ein bestimmter Datenwert im Regelfall ist. Auch dies ist ein-im Vergleich zu im Stand der Technik bekannten Indexierungsverfahrenvorteilhafter Aspekt: ist zum Beispiel bekannt, dass in einer indizierten Spalte einer klassischen Tabelle eine 9stellige alphanumerische Ausweis-ID gespeichert werden soll, so wird in der Regel die entsprechende Spalte bereits so angelegt, dass der in ihr zu speichernde Datenwert möglichst exakt passt um eine Verschwendung von Speicherplatz zu vermeiden, als im vorliegenden Beispiel als Varchar(9). Die in einem für diese Spalte generierten, "klassischen" Index gespeicherten Werte bestehen aus exakt 9 Symbolen, sodass umgekehrt anhand der Größe der in dem Index befindlichen Token Rückschlüsse auf die Art der indizierten Spalte bzw. des indizierten Attributs möglich sind. Da erfindungsgemäß ein oder mehrere der Felder Feldwerte beinhalten, die in Token (unterschiedlicher Größe) tokenisiert werden, enthält der generierte Index Token unterschiedlicher Länge und lässt auch deshalb keinen Rückschluss auf die semantische Bedeutung der in dem Index enthaltenen Token zu oder erschwert diesen zumindest.

Nach Ausführungsformen der Erfindung umfasst die Erstellung des Index ein Erzeugen von dritten Token aus dritten Feldwerten der mehreren Datensätze, wobei die dritten Feldwerte in dritten der Felder gespeichert sind, wobei die dritten Felder einem dritten Feldtyp angehören. Die Erzeugung der dritten Token umfasst eine Verwendung eines der dritten Feldwerte in seiner Gesamtheit als eines der dritten Token. Auch die dritten Token werden zusammen mit den ersten und zweiten Token und mit den ggf. vorhandenen Token von Feldwerten weiterer Feldtypen zusammen in der gleichen Indexstruktur gespeichert unabhängig von der Herkunft der Token aus einem Feld eines ersten, zweiten, dritten oder sonstigen Feldtyps.

Somit ist es durchaus möglich, dass der Index auch Token aus Feldern von Feldtypen beinhaltet, auf die keine Tokenisierung angewandt wird oder deren Inhalt sich schlichtweg nicht in einzelne Token aufteilen lässt. In Kombination mit ein oder mehreren Feldwerten, die jeweils in mehrere Token aufgeteilt werden, besteht aber dennoch auch für den Inhalt solcher nicht-tokenisierter Felder ein hinreichender Schutz vor der korrekten Interpretation der indizierten Daten rein anhand des Index durch unberechtigte Dritte.

Nach Ausführungsformen umfasst die Erzeugung der ersten Token eine Anwendung einer Tokenisierungslogik auf einen der ersten Feldwerte zur Erzeugung mehrerer der ersten Token aus diesem ersten Feldwert. Die Erzeugung der zweiten Token umfasst eine Verwendung eines der zweiten Feldwerte in seiner Gesamtheit als eines der zweiten Token.

Vorzugsweise hat der Index die Struktur eines Baums, insbesondere eines B+ Baums. Das bedeutet, dass die indizierten Token in dem Index baumartig organisiert und nach einem oder mehreren vorgegebenen Sortierkriterien sortiert sind, wobei die Sortierkriterien die Position der Token innerhalb der Baumstruktur bestimmen.

Dies kann vorteilhaft sein, da eine Baumstruktur insbesondere die Struktur eines B Plusbaums, eine besonders effiziente und schnelle Suche nach den in dem Index gespeicherten Token ermöglicht.

Nach Ausführungsformen umfasst das Verfahren ferner das Speichern der Datensätze in einer durch das DBMS verwalteten Datenbank. Die Feldwerte jedes Datensatzes werden jeweils in ein eigenes Feld gespeichert, wobei im Zuge der Speicherung das DBMS für jeden der Datensätze ein Zufallswert generiert und als Feldwert in ein vordefiniertes Zufallswert-Feld gespeichert wird. Die Zufallswerte können beispielsweie durch das DBMS selbst oder durch ein DBMS-Plug-in oder durch eine Applikationslogik, die die Datensätze erstellt und diese zur Speicherung an das DBMS übermittelt, automatisch erzeugt werden, z.B. im Zuge der Speicherung oder der Erzeugung der Datensätze. Die in den Zufallswert-Feldern gespeicherten Zufallswerte werden als weitere Token bei der Erzeugung des Index verwendet, sodass die Zufallswerte zu indexierten Token werden, wobei der Ort der Speicherung der ersten und zweiten Token und der Zufallswert-Token in der Struktur des Index unabhängig davon erfolgt, von welchem der Felder die Token stammen.

Die Verwendung von zusätzlichen Feldern für die Speicherung von Zufallswerten und die automatische Generierung und Speicherung von Zufallswerten kann vorteilhaft sein, da sie eine Zuordnung von Token zu semantischen Konzepten rein anhand der Indexstruktur weiter erschwert bzw. unmöglich macht. Insbesondere falls der Inhalt der meisten Felder textueller oder audiovisueller Natur ist und nur einige wenige Zahlenwerte enthält, und falls der Inhalt dieser Zahlenwerte aber besonders sensibel ist, kann gemäß Ausführungsformen der Erfindung ein Zufallswertgeneratork der als Zufallszahlen-Generator ausgebildet ist, verwendet werden, um die Datensätze zusätzlich mit Zahlen anzureichern, um dadurch eine Identifikation der Bedeutung der einzelnen Zahlen in dem Index zu verschleiern.

Nach Ausführungsformen speichert der Index sämtliche aus den Feldwerten der Datensätze einer Datenbank erzeugte Token in einer Weise, dass der Index jedes Token nur einmal enthält, wobei jedes Token Zeiger auf ein oder mehrere der Datensätze, aus deren Feldwerten es erzeugt wurde, beinhaltet.

Wenn ein erfindungsgemäß erzeugter Index also nach einem bestimmten Suchwert durchsucht wird und als Ergebnis der Suche ein in dem Index gespeichertes Token identifiziert wird, welches identisch ist mit dem Suchwert, so verweist dieses Token mittels Zeigern auf sämtliche Datensätze, die dieses Token zumindest einmal in zumindest einem ihrer Feldwerte enthalten und die bei der Erstellung des Index herangezogen wurden. Die Datensätze, die also einen "Treffer" im Hinblick auf den Suchwert darstellen, können anhand der Verweise sehr schnell identifiziert und zurückgegeben werden, ohne dass ein sequenzieller Suchlauf über sämtliche Datensätze notwendig wäre.

Nach Ausführungsformen handelt es sich bei dem DBMS um ein NoSQL-DBMS. Dies kann vorteilhaft sein, dass da sich herausgestellt hat, dass insbesondere NoSQL-DBMS, die oftmals eine flexiblere Struktur aufweisen als klassische SQLbasierte DBMSs. Aufgrund der Flexibilität ihrer Struktur eignen in sich NoSQL-DBMSs also ganz besonders für die Verwaltung und Speicherung von Datensätzen, aus welchen ein Index gemäß Ausführungsformen der Erfindung erstellt werden kann.

Vorzugsweise sind die in dem Index gespeicherten Token frei von Referenzen auf einzelne Felder oder Feldtypen, deren Inhalt zur Erzeugung der Token dienten.

Dies kann vorteilhaft sein, da hierdurch sichergestellt wird, dass die Verweise zwar eine Identifizierung der einzelnen Datensätze, die einen bestimmten Suchwert enthalten, ermöglicht, nicht jedoch eine Identifizierung einzelner Felder bzw. Feldtypen, da eine Identifizierung von Feldtypen Rückschlüsse auf die Bedeutung der in einem bestimmten Feld gespeicherten Feldwerte zulässt. Dadurch, dass die Indexstruktur frei ist von Referenzen auf einzelne Feldtypen bzw. Felder wird verhindert, dass der semantische Gehalt der indizierten Token aus der Indexstruktur abgeleitet werden kann.

Nach Ausführungsformen umfassen die Datensätze unterschiedlich viele Feldwerte (und belegen entsprechend eine unterschiedliche Anzahl von Feldern).

Dies kann vorteilhaft sein, da ein sehr hoher Grad an Flexibilität bezüglich der Struktur und des Umfangs der Datensätze, die von dem erfindungsgemäßen DBMS verwaltet und gespeichert werden können, geboten wird. Zudem erhöht der Umstand, dass einzelne Datensätze eine unterschiedliche Anzahl und/oder eine unterschiedliche Zusammensetzung von Feldern unterschiedlicher Feldtypen haben können, zusätzlich die "chaotische" Natur des Index, da die Anzahl der Token, die pro Datensatz erzeugt und gespeichert wird, noch stärker schwankt, wenn unterschiedliche Datensätze unterschiedliche Felder (sowohl im Hinblick auf deren Zahl als auch deren Typ)haben.

Nach Ausführungsformen besitzen der erste Feldtyp und der zweite Feldtyp ein gemeinsames, generisches Datenformat. Dieses generische Datenformat erlaubt die Speicherung von Feldwerten, die sowohl Textdaten als auch zumindest Bilddaten, Audiodaten und/oder Videodaten beinhalten.

Dies kann vorteilhaft sein, da in einem bestimmten Feld eine große Anzahl an unterschiedlichen Datentypen gespeichert werden können. Ein Nutzer bzw. ein Applikationsprogramm, welches Datensätze in der Datenbank speichern will, muss sich also nicht um die Konsistenz und Passung von Datentypen kümmern. Außerdem verhindert die Verwendung von Feldtypen, die nicht auf einen bestimmten Datentyp (wie zum Beispiel Integer, Boolean, Varchar, etc.), beschränkt sind, bzw. denen ein sehr generischer Datentyp zugewiesen ist, dass ein unberechtigter Dritter, der sich Zugriff auf den Index verschafft hat, anhand der indizierten Datentypen Rückschlüsse auf den Inhalt der Attribute der ursprünglichen Datensätze ziehen kann.

Nach Ausführungsformen ist die Tokenisierungslogik ein Volltextindizierer der dazu konfiguriert ist, Texte in Wörter zu zerlegen und die Wörter als Token auszugeben.

Nach Ausführungsformen ist die Tokenisierungslogik ein generischer Tokenisierer. Die Anwendung des generischen Tokenisierers auf einen Feldwert umfasst das Erkennen von Daten unterschiedlichen Datentyps innerhalb des Feldwertes. Die Daten unterschiedlichen Datentyps umfassen Textdaten sowie Bilddaten und einen oder mehrere weitere Datentypen. Die ein oder mehreren weiteren Datentypen umfassen Audiodaten und/oder Videodaten. Ferner umfasst die Anwendung eine automatische Identifikation und Anwendung von Tokenisierungsroutinen, die an den erkannten Datentyp angepasst sind.

Die Verwendung von generischen Tokenisierern kann insbesondere in Kombination mit der Verwendung von generischen Datentypen für mehrere oder alle der Feldtypen einer Datenbank vorteilhaft sein: das DBMS bzw. Client-Applikationsprogramme des DBMS müssen also nicht verschiedene Tokenisierungslogik für verschiedene Datentypen vorhalten und müssen auch nicht Prüfroutinen vorsehen um sicherzustellen, dass der richtige Tokenisierer auf den richtigen Feldtyp bzw. Datentyp angewandt wird. Vielmehr kann der gleiche Tokenisierer auf die meisten oder alle Feldtypen angewandt werden, da die generische Tokenisierungslogik des Tokenisierers bereits selbsttätig dazu in der Lage und entsprechend konfiguriert ist, automatisch zu erkennen, ob ein Feldwert Zahlen, Wörter aus Buchstaben, Boolsche Werte, Audiodateien, Bilddateien, Videodateien oder sonstige Datenstrukturen eines bestimmten Typs beinhaltet und diese Elemente als einzelne Token zu extrahieren.

Beispielsweise kann ein generischer Tokenisierer neben einem Volltextindizierer, der auf Textdaten arbeitet, auch einen Segmentierungsalgorithmus beinhalten, der auf Bilddaten arbeitet. Der Segmentierungsalgorithmus kann bestimmte vordefinierte Grundformen, zum Beispiel Quadrate, Rechtecke Kreise und Ellipsen, erkennen, in einer bestimmten Weise kodieren, und die codierten Grundformen jeweils einzelnen als extrahierte Token im gleichen Index speichern, in dem auch die von dem Volltextindizierer extrahierten einzelnen Wörter gespeichert werden.

Nach Ausführungsformen beinhalten die ersten Feldwerte Volltexte, wobei die Volltexte aus Buchstaben des Alphabets gebildete Wörter beinhalten und mehrere der ersten Feldwerte ein oder mehrere Zahlen beinhalten. Die zweiten Feldwerte bestehen jeweils aus einer Zahl, wobei jede Zahl, die in einem der zweiten Felder gespeichert ist,
- einen Identifikator einer Person repräsentiert, welcher der Datensatz, der den Identifikator im zweiten Feld enthält, zugeordnet ist; oder
- einen Berechtigungsnachweis repräsentiert, welcher der Datensatz, der den Identifikator im zweiten Feld enthält, zugeordnet ist, wobei der Berechtigungsnachweis der Person Zugriffsrechte auf geschützte Daten oder geschützte Software- oder Hardwarefunktionalitäten einräumt; oder
- einen geheimen kryptographischen Schlüssel repräsentiert; oder
- ein in Form einer Zahl kodiertes biometrisches Merkmal einer Person repräsentiert.

Anhand dieser Beispiele ist ersichtlich, dass Zahlenwerte (aber auch Werte anderen Datentyps) sensible und gegebenenfalls personenbezogene Daten beinhalten können, die jedoch in einer Indexstruktur gemäß Ausführungsformen der Erfindung dennoch sicher und im Klartext und unverschlüsselt gespeichert werden können, da deren semantische Gehalt aus dem Index nicht erkennbar ist. Beispielsweise sind gerade sicherheitskritischen Systeme oftmals dadurch vor unberechtigten Zugriff geschützt, dass nach mehrfacher Eingabe eines falschen Berechtigungscodes (PIN) eine Authentifizierung über einen bestimmten Nutzernamen gar nicht mehr möglich ist (temporäre oder permanente Sperrung). Sogar falls ein unberechtigter Dritter also anhand eines Index sämtliche Datenwerte eines bestimmten Datensatzes herausfindet, und sogar wenn er die Person identifizieren kann, welcher dieser Datensatz zugeordnet ist, ist ab einer gewissen Anzahl an indizierten Zahlenwerten die Wahrscheinlichkeit sehr hoch, dass die zufällige Auswahl und Verwendung einiger dieser Zahlenwerte als Berechtigungscodes zur Authentifizierung gegenüber einem geschützten System zur Sperrung führt.

In einem weiteren Aspekt umfasst die Erfindung ein Server-Computersystem, welches ein oder mehrere Speichermedien umfasst. Die ein oder mehreren Speichermedien beinhalten:
- eine Vielzahl von Datensätzen in einzeln verschlüsselter Form, wobei das Server-Computersystem keinen Zugriff auf die Datensätze in unverschlüsselter Form und keinen Zugriff auf Mittel zur Entschlüsselung der Datensätze besitzt, wobei jeder der unverschlüsselten Datensätze ein oder mehrere jeweils in eigenen Feldern gespeicherte Feldwerte beinhaltet;
- einen unverschlüsselten Index, wobei der unverschlüsselte Index Token umfasst, die durch Tokenisierung mehrerer der Feldwerte der unverschlüsselten Datensätze erzeugt wurden, wobei jedes der in dem Index enthaltenen Token verknüpft ist mit ein oder mehreren Zeigern auf diejenigen der Datensätze, durch deren Tokenisierung das Token erzeugt wurde, wobei der Index frei ist von Zeigern auf einzelne Felder dieser Datensätzen, die das Token beinhalten.

Beispielsweise können verschlüsselte und unverschlüsselte Datensätze jeweils identische Positionen innerhalb einer Datenbank einnehmen oder die gleichen IDs haben auf welche die Zeiger verweisen, sodass die Zeiger des Index, die ursprünglich auf die unverschlüsselten Datensätze verwiesen aus welchen das entsprechende Token stammt auch gleichermaßen die entsprechenden verschlüsselten Datensätze identifizieren.

Außerdem beinhaltet das Server-Computersystem eine Schnittstelle, die konfiguriert ist zum:
- Empfang einer Suchanfrage eines Client-Computersystems über ein Netzwerk;
- als Antwort auf die Suchanfrage, Durchführung der angefragten Suche in dem Index um ein oder mehrere der verschlüsselten Datensätze als Ergebnis der Suche zu identifizieren; und
- Zurückgabe der identifizierten ein oder mehreren verschlüsselten Datensätze in verschlüsselter Form an das Client-Computersystem über das Netzwerk.

Nach Ausführungsformen ist das Server-Computersystem konfiguriert ist zum:
- Empfang des Index in verschlüsselter Form über das Netzwerk, wobei der verschlüsselte Index mittels eines öffentlichen Schlüssels des Server- Computersystems verschlüsselt wurde;
- Entschlüsselung des empfangenen verschlüsselten Index mittels eines privaten Schlüssels des Server- Computersystems, wobei der private und der öffentlicher Schlüssel des Server- Computersystems ein asymmetrisches kryptographisches Schlüsselpaar bilden;
- Speichern des entschlüsselten Index; und
- Empfang der verschlüsselten Datensätze über das Netzwerk und Speichern der verschlüsselten Datensätze. Die Speicherung der verschlüsselten Datensätze durch das Server-Computersystem erfolgt, ohne dass das Server-Computersystem diese entschlüsseln kann. Die verschlüsselten Datensätzen und der entschlüsselte Index können beispielsweise auf ein oder mehreren Speichermedien, auf die das Server-Computersystem Zugriff hat, gespeichert werden.

Den Index und die Datensätze kann das Server-Computersystem beispielsweise von dem Client-Computersystem empfangen, das zu einem späteren Zeitpunkt auch die Suchanfrage an das Server-Computersystem senden wird oder von einem anderen Client-Computersystem.

Dies kann vorteilhaft sein, da auch der Schritt der Indexerstellung, bei welchem die Datensätze notwendigerweise in unverschlüsselter Form vorliegen müssen, durch den Client und nicht den Server vorgenommen wird, sodass der Server zu keinem Zeitpunkt Zugriff auf den Inhalt der Datensätze hat.

In einem weiteren Aspekt betrifft die Erfindung ein Client-Computersystem mit einer Schnittstelle, die konfiguriert ist zum:
- Senden einer Suchanfrage mit einem Suchwert an eine Schnittstelle eines Server-Computersystems über ein Netzwerk, wobei der Suchwert unverschlüsselt ist und wobei der Suchwert ein Token ist, das durch Tokenisierung von Feldwerten ein oder mehrerer unverschlüsselter Datensätze erzeugbar ist, wobei die Suchanfrage ein Durchsuchen eines unverschlüsselten Index durch das Server-Computersystem bewirkt, wobei der Index durch Tokenisierung von Feldwerten der unverschlüsselten Datensätze erzeugt wurde;
- Empfang einer oder mehrerer Datensätze in verschlüsselter Form von dem Server-Computersystem als Antwort auf die Suchanfrage;
- Entschlüsselung der empfangenen ein oder mehreren verschlüsselten Datensätze mit einem privaten Schlüssel der unzugänglich für das Server-Computersystem ist.

Nach Ausführungsformen beinhaltet das Client-Computersystem ein oder mehrere Datenspeichermedien, in welchen die Datensätze unverschlüsselt gespeichert sind. Die Datensätze bestehen jeweils aus einer Menge aus mehreren Feldwerten, wobei die Feldwerte einzeln jeweils in einem eigenen Feld gespeichert werden. Das Client-Computersystem ist ferner konfiguriert zur:
- Generierung eines Index aus den unverschlüsselten Datensätzen;
- Verschlüsselung des Index mit einem öffentlichen Schlüssel eines Server-Computersystems;
- Nach der Generierung des Index, Verschlüsselung der Datensätze jeweils einzeln so, dass das Client-Computersystem diese wieder entschlüsselt kann, nicht jedoch das Server-Computersystem;
- Senden der verschlüsselten Datensätze und des verschlüsselten Index von dem Client- Computersystem an das Server- Computersystem über ein Netzwerk.

In einem weiteren Aspekt betrifft die Erfindung ein verteiltes Computersystem umfassend ein Server-Computersystem nach einer der hier beschriebenen Ausführungsformen und ein oder mehrere Client-Computersysteme nach einer der hier beschriebenen Ausführungsformen.

Ausführungsformen der Erfindung stellen also einen durchsuchbaren, unverschlüsselten Index in Kombination mit verschlüsselten Datensätzen bereit. Diese Kombination aus Index und Datensätzen genügt sowohl hohen Ansprüchen an die Datensicherheit als auch an die Schnelligkeit des Auffindens bestimmter Datensätze. Von vielen Anwendungsszenarien ist das Problem bekannt, dass Daten in verschlüsselter Form gespeichert werden um zu verhindern, dass unberechtigte Dritte bei Verlust der Daten auf diese zugreifen können. Insbesondere im Kontext der Verwendung von Cloud Speicherdiensten ist die Angst vor Datenverlust allgegenwärtig und in hohem Maße begründet. Eine Verschlüsselung der Daten schützt diese wirksam vor unberechtigtem Zugriff, allerdings bewirkt die Verschlüsselung, das klassische Indizierungsverfahren nicht mehr angewendet werden können. Insbesondere bei sehr umfangreichen Datenbanken ist jedoch das Vorhandensein geeigneter Indexstrukturen eine unabdingbare Voraussetzung, um in angemessener Zeit bestimmte Daten identifizieren und gegebenenfalls modifizieren zu können.

Ausführungsformen der Erfindung stellen nun eine Lösung für dieses Dilemma bereit: da der Index auch in unverschlüsselter Form aufgrund seiner "inhärent chaotischen Struktur" sicher ist, muss er nicht verschlüsselt werden um die Vertraulichkeit der in ihm gespeicherten Informationen zu schützen. Denn der Index enthält zwar die aus den Datensätzen extrahierten Token, enthält aber keine Information darüber, von welchen Feldtypen diese Token stammen und welche Attribute diese repräsentieren. Es ist also möglich, den Index in unverschlüsselter Form bereitzustellen und für die schnelle Suche zu verwenden. Die Datensätze wiederum, die nach wie vor der Information beinhalten, was die einzelnen Token (Wörter/Zahlen/Bildsegmente) bedeuten und welche Attribute sie repräsentieren, werden in verschlüsselter Form bereitgestellt. Insbesondere wenn die Datensätze einzelnen verschlüsselt werden (also nicht die Datenbank als Ganze) kann der Index dazu verwendet werden, einzelne Datensätze zu identifizieren, die dann in verschlüsselter Form zurückgegeben werden. Wenn die zurückgegebenen, verschlüsselten Datensätze den richtigen (berechtigten) Empfänger erreichen, kann der Empfänger diese mit seinem Schlüssel entschlüsseln. Für den Fall dass die zurückgegebenen, verschlüsselten Datensätze einen falschen (unberechtigten) Empfänger erreichen, kann dieser mit den Datensätzen nichts anfangen, da diese verschlüsselt sind.

Beispielsweise kann es sich bei dem Server Computersystem um ein verteiltes Computersystem eines Cloud Dienstes handeln, das aus einer Vielzahl von vernetzten Rechnern und Speichermodulen besteht. Ausführungsformen ermöglichen es dadurch, hochkritische, sensible Daten auf Cloud-Diensten zu speichern auch dann, wenn diese nicht vollständig vertraut wird oder werden kann. Denn der Cloud Dienstleister erhält die wertvollen Datensätze ja nur in verschlüsselter Form und kann diese auch nicht entschlüsseln. Lediglich den Index kann das Cloud-System entschlüsseln und muss dies auch tun um die Anfragen von ein oder mehreren Client-Computern bzw. Client-Applikationen bearbeiten zu können. Dadurch können Firmen nun Kosten für ihre eigene IT-Infrastruktur reduzieren, indem sie lediglich noch lokal den Index generieren und diesen mit dem öffentlichen Schlüssel des Cloud-Dienstes verschlüsseln. Außerdem verschlüsselt die Firma ihre Datensätze noch mit einem nur ihr bekannten privaten Schlüssel. Die Aufgabe, eine große Anzahl an verschlüsselten Datensätzen zu speichern und abrufbar vorzuhalten, gegebenenfalls einer großen Anzahl von (berechtigten) Client-Applikationen die Suche in dem Index zu ermöglichen und die gefundenen Datensätze (in verschlüsselter Form) zurückzugeben kann somit an einen Cloud-Dienst ausgelagert werden, ohne die Hoheit über die eigenen Daten zu verlieren.

Bei dem Client-Computersystem kann es sich um ein privat genutztes Standard-Computersystem einer natürlichen Person handeln, z.B. um einen Desktop-Computer, ein Notebook oder ein Tablet-Computer. Alternativ kann es sich bei dem Client-Computersystem um einen Terminal-Computer oder einen ebenfalls im Hinblick auf andere Dienste und Applikationen als Server agierenden Computer handeln, der z.B. von Angestellten einer Firma verwendet wird.

Unter einem "**Datenbankmanagementsystem"** oder **"DBMS"** wird im Folgenden ein elektronisches System zur Speicherung und Wiedergewinnung von Daten verstanden. Vorzugsweise werden die Daten in dem DBMS widerspruchsfrei und dauerhaft gespeichert und verschieden Anwendungsprogrammen und Nutzern in bedarfsgerechter Form effizient zur Verfügung gestellt. Ein DBMS kann typischerweise ein oder mehrere Datenbanken beinhalten und die darin enthaltenen Datensätze verwalten. Bei dem DBMS handelt es sich vorzugsweise um ein feldorientiertes DBMS, also um ein DBMS, das dazu konfiguriert ist, Teile einzelner Datensätze, sogenannte "Feldwerte", in mehrere unterschiedliche Felder zu speichern.

Unter einem **"Datensatz"** wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar. Beispielsweise kann ein einzelner Datensatz eine bestimmtes physisches Objekt, z.B. eine natürliche Person, repräsentieren. Bei der Person kann es sich z.B. um einen Angestellten, einen Patienten, einen Kunden, etc. handeln. Der entsprechende Datensatz kann eine vordefinierte Menge von Attributwerten dieser Person beinhalten (z.B. Name oder Pseudonym, Alter, Größe, Gewicht, Geburtsdatum, Ausweisnummern, Sicherheitszertifikate, Authentifizierungscodes, biometrische Daten und andere).

Beispielsweise kann ein Datensatz eine Gruppe von inhaltlich zusammenhängenden (zu einem Objekt gehörenden) Datenfeldern repräsentieren, z. B. Artikelnummer, Artikelgröße, Artikelfarbe, Artikelname oder ähnliches. Die Feldtypen ,Name`, 'Adresse' und 'Geburtsdatum' könnten z.B. die logische Struktur eines Datensatzes zum Objekttyp "Person" bilden. Datensätze entsprechen einer logischen Struktur, die bei der Entwicklung der Datenbank festgelegt wurde und in manchen Ausführungsformen auch noch zur Laufzeit der Datenbank verändert werden kann, z.B. durch Hinzufügen, Entfernen oder Umbenennen von Feldern. In der Datenverarbeitung werden Daten zu Datensätzen zusammengefasst und in Datenbanken gespeichert, sie sind Gegenstand der Verarbeitung von Computerprogrammen und werden von diesen erzeugt, gelesen, verändert und gelöscht.

Obwohl Daten eigentlich immer als Aneinanderreihung mehrerer Datenelemente auftreten, sollen hier nicht alle Erscheinungsformen von Daten einen 'Datensatz' darstellen, sondern nur Datengruppierungen, die zu einem bestimmten Objekt gehören und in Feldern organisiert sind, welche von einem DBMS gemeinsam verwaltet werden, wobei das DBMS dazu ausgebildet ist, die Datenfelder mittels vordefinierter Befehle anzulegen, zu löschen und/oder umzubenennen und ggf. auch in das Zugriffsrechtsmanagement des DBMS einzubinden. Nicht als Datensätze in diesem Sinn gelten demnach zum Beispiel: Fließtexte, Drucker- oder Video-Datenströme, Inhalte von ausführbaren Dateien, Fotodaten oder die Daten von Grafiksoftware u. a. Diese Daten können aber in einem Feld eines Datensatzes gespeichert sein.

Unter einem "**Feld**" wird im Folgenden ein Bereich auf einem logischen oder physikalischem Datenträger bezeichnet, der von einem DBMS verwaltet wird, der einem vordefinierten Feldtyp zugeordnet ist und der zur Speicherung eines Feldwertes eines Datensatzes angelegt und bestimmt ist. Eine "Feld" ist also ein Element zur Speicherung eines Feldwertes eines Datensatzes gemäß obiger Definition. Felder eines Datensatzes werden von einem DBMS gemeinsam verwaltet. Das Feld kann von dem DBMS mittels vordefinierter Befehle angelegt, gelöscht oder umbenannt und ggf. auch in das Zugriffsrechtsmanagement des DBMS einbezogen werden.

Ein **"Feldtyp"** ist eine Kategorie bzw. ein Typ, dem ein bestimmtes Feld angehört. Beispielsweise kann ein Feldtyp ein bestimmtes Attribut eines physischen Objektes repräsentieren. Beispielsweise kann ein DBMS zur Speicherung von Datensätzen, die Attribute von Angestellten enthalten, Feldtypen wie "Name", "Pseudonym", "Ausweisnummer"; "Zugriffszertifikat für Raum R", "Zugriffszertifikat für Gerät G", "Zugriffszertifikat für Gebäude GB", "Alter" verwenden. Jedes Feld ist dabei genau einem Feldtyp zugeordnet. Vorzugsweise darf jeder Datensatz maximal nur ein Feld für jeden im DBMS vordefinierten Feldtyp enthalten.

Ein "**Feldwert**" ist ein Datenwert, der Bestandteil eines Datensatzes ist und der zur Speicherung in einem Feld eines bestimmten Feldtyps bestimmt ist. Beispielsweise kann ein Feldwert des Datensatzes für einen bestimmten Angestellten "Max Mustermann" einen ersten Feldwert "Max Mustermann" für den Feldtyp "Name", einen weiteren Feldwert "13425298833" für den Feldtyp "Ausweisnummer", einen weiteren Feldwert "237971113" für den Feldtyp "Zugriffszertifikat für Raum R" beinhalten. Ein Feldwert kann aus einem einzigen Wort, einer einzigen Zahl, oder einer Kombination aus mehreren Wörtern und/oder Zahlen und/oder anderen Datenformaten bestehen, wobei verschiedene Ausführungsformen der Erfindung verschiedene Grade an Flexibilität im Hinblick auf die Art und Kombinierbarkeit von Datentypen innerhalb des gleichen Feldwertes umfassen.

Im Falle einer klassischen SQL-basierten Datenbank würde ein Feldtyp also einer Spalte einer Tabelle entsprechen, z.B. einer Spalte für "Alter" in einer "Angestelltentabelle". Jede Zeile in der Angestelltentabelle würde einem Datensatz entsprechen, welcher Attributwerte eines bestimmten Angestellten beinhaltet. Jede "Zelle" dieser Zeile entspricht einem Feld und dient der Speicherung eines Feldwertes (also eines einfachen oder zusammengesetzten Attributwerts des Angestellten). Ein Feld entspricht also dem Speicherbereich, in welchem ein bestimmter Datenwert/Feldwert eines Datensatzes gespeichert wird.

Unter einer "**Datenbank**" wird im Folgenden eine (typischerweise große) Menge von Daten verstanden, die in einem Computersystem von einem DBMS nach bestimmten Kriterien verwaltet wird. Die Daten sind dabei in einer Vielzahl von Datensätzen organisiert.

Ein "**NoSQL**" (englisch für Not only SQL) DBMS ist ein DBMS, das einem nichtrelationalen Ansatz der Datenspeicherung folgt und keine festgelegten Tabellenschemata benötigt. Zu den NoSQL DBMSs gehören insbesondere dokumentenorientierte DBMSs wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID- DBMSs wie MySQL Cluster, Key-Value-Datenbanken wie Chordless, Google BigTable, GT.M, InterSystems Cache, Membase, Redis, Sortierte Key-Value-Speicher, Multivalue-Datenbanken, Objektdatenbanken wie Db4o, ZODB, spaltenorientierte Datenbanken und temporale Datenbanken wie Cortex DB.

Unter einem "**Zertifikat**" wird hier im Folgenden ein digitales Zertifikat verstanden. Ein Zertifikat ist ein digitaler Datensatz, der bestimmte Eigenschaften von Nutzern oder anderen Objekten bestätigt und dessen Authentizität und Integrität durch kryptografische Verfahren geprüft werden kann. Das digitale Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können. Die Ausstellung des Zertifikats erfolgt vorzugsweise durch eine offizielle Zertifizierungsstelle, die Certification Authority (CA). Beispielsweise kann das Zertifikat als Zahlenwert ausgebildet sein, welchem Metadaten zugeordnet sind. Die Verwendung von Zahlwerten kann vorteilhaft sein, da diese sich gut indexieren lassen sich und im Falle einer notwendigen Modifikation der Metadaten (z.B. Verlängerung der Validität) unverändert bleiben, also auch ihre Position innerhalb des Index beibehalten können. Vorzugsweise sind die Zertifikate also als Zahlwerte ausgebildet die keinen öffentlichen Schlüssel beinhalten, sondern mit Metadaten oder einem Public-Key-Zertifikat verknüpft gespeichert sind, wobei die Metadaten den Geltungsbereich bzw. Gültigkeitsdauer des Zertifikats näher festlegen. Alternativ dazu kann ein Zertifikat auch nach dem Standard X.509 ausgebildet sein, also einen öffentlichen Schlüssel beinhalten und die Identität des Inhabers und weitere Eigenschaften eines öffentlichen kryptographischen Schlüssels des Zertifikats bestätigen. Ein Zertifikat kann sich, muss sich aber nicht notwendigerweise auf einen kryptographischen Schlüssel beziehen, sondern allgemein Daten zur Prüfung einer elektronischen Signatur enthalten oder mit diesen verknüpft gespeichert sein.

Ein "**Tokenisierer**" ist eine Programlogik, die Daten, zum Beispiel einen Feldwert, als Input erhält, die Daten analysiert, z.B. um Delimiter oder andere Zerlegungskriterien und Muster zu erkennen und die Daten dann in ein oder mehrere Token als Ergebnis der Analyse zerlegt und die Token zurückgibt. Es ist auch möglich das nicht alle Token zurückgegeben werden konnte. Beispielsweise kann ein Volltextindizierer semantisch unbedeutende Stoppwörter erkennen und herausfiltern, sodass diese nicht indiziert werden. Einen Datenwert zu "tokenisieren" bedeutet also, den Datenwert nach einem bestimmten Schema in mehrere Bestandteile zu zerteilen. Die Bestandteile stellen die Token dar. So können z.B. natürlichsprachige Texte an vordefinierten Trennzeichen, z.B. Leerzeichen, Punkten oder Kommata, aufgeteilt werden, die so generierten Bestandteile (Wörter) werden als Token verwendet. Es ist möglich dass manche Token nicht für die Indizierung verwendet werden (z.B. Stopwörter) oder die Token vor der Indizierung zusätzlich verarbeitet werden (z.B. Reduzierung von Wörtern auf den Wortstamm). In diesem Fall erfolgt vorzugsweise eine gleichartige Verarbeitung des Suchwerts durch das Client-Computersystem oder das Server-Computersystem um sicherzustellen, dass die Suchwerte der Suchanfragen den in dem Index enthaltenen Token entsprechen.

Ein "**Index**" ist eine Datenstruktur, die die Suche nach bestimmten Datenwerten durch ein Datenbankmanagementsystem beschleunigt. Ein Index besteht aus einer Ansammlung von Zeigern (Verweisen), die eine Ordnungsrelation auf mehrere (in dem Index gespeicherte - "indizierte" - Datenwerte definieren. Beispielsweise werden hierfür B+-Bäume verwendet. Jeder indizierte Datenwert ist mit weiteren Zeigern verknüpft, die auf Datensätze verweisen, in welchen der gefundene indizierte Datenwert enthalten ist und die die Datenbasis für die Erstellung des Index darstellten. Datenbankmanagementsysteme verwenden Indices um als Antwort auf eine Suchanfrage die gewünschten Datensätze schnell zu identifizieren, indem zunächst der Index entlang der Zeiger nach einem Datenwert durchsucht wird welcher identisch zu einem in der Suchanfrage enthaltenen Referenzwert ist. Ohne Index müssten die von dem DBMS verwalteten Datenwerte eines Feldes sequenziell durchsucht werden, während eine Suche mit Hilfe des Index, z.B. eines B+ Baums, oft nur logarithmische Komplexität hat.

Die Verwendung von Ordinalzahlen wie erstes, zweites, drittes etc. dient hier allein der Unterscheidung von Elementen und/oder Personen mit ansonsten gleicher Bezeichnung und soll keine bestimmte Reihenfolge implizieren. Ferner kann es sich bei Elemente und/oder Personen, deren Bezeichnung sich allein durch eine Ordinalzahl unterscheidet, soweit sich aus dem konkreten Zusammenhang nicht eindeutig etwas anderes ergibt, um identische oder voneinander verschiedene Elemente bzw. Personen handeln.

### Kurzbeschreibung der Figuren

Ein exemplarisches Verfahren zur Erstellung eines Index sowie ein entsprechendes System sind in den anhängenden Zeichnungen 1 bis 5 veranschaulicht. Darin zeigen:
- Figur 1: ein Blockdiagramm einer Ausführungsform eines erfindungsgemäßen Computersystems.
- Figur 2: die in verschiedenen Feldern zweier Datensätze gespeicherten Feldwerte sowie die aus diesen erzeugten Tokenmengen.
- Figur 3: ein Flussdiagramm zur Erzeugung eines Index gemäß einer Ausführungsform.
- Figur 4: ein verteiltes Computersystem, das ein Server-Computersystem und mehrere Client-Computersysteme umfasst.
- Figur 5: weitere Details des Server-Computersystems und eines der Client-Computersysteme.
- Figur 6: ein Flussdiagramm eines Verfahrens zur Bereitstellung von Datensätzen durch ein Server-Computersystems.

### Ausführliche Beschreibung

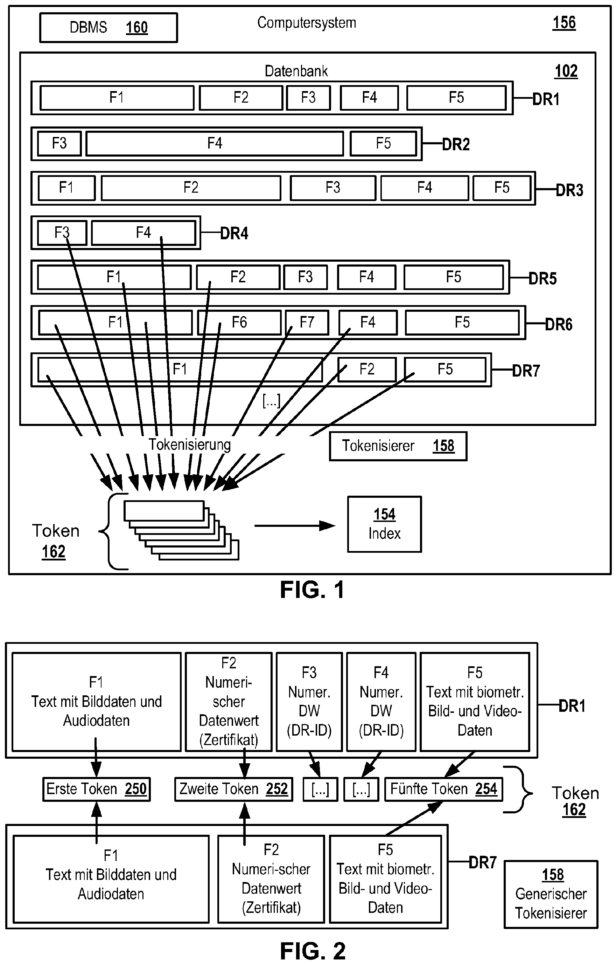

**Figur 1** zeigt ein Blockdiagramm einer Ausführungsform eines erfindungsgemäßen Systems zur Erzeugung eines "chaotischen" Index.

Ein Datenbankmanagementsystem, zum Beispiel ein non-SQL DBMS 160 wird auf einem Computersystem 156 instanziiert. Das DBMS 160 verwaltet eine oder mehrere Datenbanken. Die hier abgebildete Datenbank 102 umfasst eine Vielzahl von Datensätzen DR1, DR2, ..., DR7, ..., welche jeweils ein oder mehrere Feldwerte beinhalten. Jeder der Feldwerte eines Datensatzes ist in einem entsprechenden Feld, einer Art Datencontainer, gespeichert. Jedes Feld ist dabei einem bestimmten Feldtyp F1, F2, F3, F4, F5, F6, F7 zugewiesen. Beispielsweise ist das erste Feld von Datensatz DR1 dem Feldtyp F1 zugewiesen, das zweite Feld von Datensatz DR1 dem Feldtyp F2 usw. In analoger Weise ist das erste Feld von Datensatz DR6 dem Feldtyp F1 zugewiesen, das zweite Feld von Datensatz DR6 dem Feldtyp F6 usw. Die Zusammensetzung der Feldwerte der einzelnen Datensätze kann sich dabei im Hinblick auf deren Feldtypen unterscheiden, wie anhand der Datensätze in der Datenbank 102 ersichtlich ist. Es ist auch möglich das einzelne Datensätze gar keinen Feldwert eines bestimmten Feldtyps beinhalten. In anderen Ausführungsformen (hier nicht gezeigt) können auch mandatorische Feldtypen definiert sein, d.h., dass jeder Datensatz ein Feld für jeden mandatorischen Feldtyp beinhaltet und optional ein oder mehrere weitere Felder für optionale Feldtypen beinhaltet.

Das DBMS 160 verfügt über eine eingebaute Programlogik, die zur Generierung eines Index 154 ausgebildet ist, wobei der Index im Hinblick auf die Art und Weise, wie der Inhalt der Datensätze indiziert wird, besonders sicher ist. Der Index 154 lässt vorzugsweise auch dann keine Rekonstruktion der Datensätze bzw. des Bedeutungsgehalts der einzelnen Feldwerte zu, falls der Index in unverschlüsselter Form in die Hände unberechtigter Dritter gelangt. Die Programmlogik zur Generierung des Index umfasst einen oder mehrere Tokenisierer 158, die dazu ausgebildet sind, die Feldwerte von ein oder mehreren Feldern zu tokenisieren. Optional können auch Feldwerte ein oder mehrerer Felder zusätzlich als Ganzes ausgelesen und ohne eine Zerlegung als Token verwendet werden.

Nach alternativen Ausführungsformen wird die Programmlogik zur Generierung des Index 154 in Form eines Plug-ins oder Add-ons des DBMS bereitgestellt. Dies kann vorteilhaft sein, da mithilfe eines zusätzlichen Softwaremoduls zur Erstellung eines sicheren Index bestehende Typen von DBMSs funktional erweitert werden können, sodass eine Migration der Daten zu einem anderen DBMS um einen sicheren Index zu erstellen nicht notwendig ist. Nach einer weiteren, hier nicht dargestellten alternativen Ausführungsform kann der sichere Index 154 auch von einem eigenständigen Applikationsprogramm erstellt werden, welches in der Lage ist, die Datensätze von dem DBMS zu empfangen.

Vorzugsweise werden sämtliche oder zumindest die meisten Feldwerte sämtlicher Datensätze einer Datenbank 102 tokenisiert, sodass ein große Menge an Token 162 entsteht. In Abhängigkeit von der Art der Daten in den einzelnen Feldwerten können die Token 162 eine Mischung aus Zahlen, Buchstabenwörtern, Bildern oder Bildsegmenten, Audiodateien oder Audioelementen oder sonstigen Datenstrukturen beinhalten. Jedes der erzeugten Token ist mit einem Zeiger verknüpft gespeichert, wobei der Zeiger auf den Datensatz verweist, ihm das Token entstammt, nicht jedoch auf ein einzelnes Feld bzw. einen Feldtyp verweist, in welchem der Feldwert gespeichert wurde aus welchem der Token abgeleitet wurde.

In einem weiteren Schritt wird aus der Menge an Token 162 eine nicht-redundante, "unique" Token-Menge gebildet, in welcher jedes der Token nur ein einziges Mal vorkommt. D.h., auch wenn ein Token mit dem Wert "3467475675" mehrfach in der Datenbank 102 und damit auch in der zunächst gebildeten Tokenmenge 162 vorkommt, wird nur ein einziges Token mit dem Wert "3467475675" in der nicht-redundante Token-Menge und in dem Index 154 gespeichert. Allerdings erfolgt die Speicherung in dem Index 154 so, dass das Token auf sämtliche Datensätze DR1-DR7 verweist, in welchem es in zumindest einem Datenwert zumindest einmal enthalten ist. Vorzugsweise erfolgt die Speicherung aller Token der nicht-redundanten Tokenmenge in dem Index der Art, dass die Token nach einem Sortierkriterium sortiert werden und in sortierter Form in der Indexstruktur gespeichert werden. Die Sortierung kann beispielsweise anhand des Alphabets für alphanumerische Daten oder sonstiger, an die Daten angepasste Sortierkriterien erfolgen. Da die Token in dem Index vorzugsweise in sortierter Form gespeichert sind, und weiterhin vorzugsweise in einer Baumstruktur gespeichert sind, ist es sehr schnell möglich, ein bestimmtes Token innerhalb des Index zu identifizieren und dann die Verweise dieses identifizierten Tokens auf ein oder mehrere Datensätze zu verwenden, um sehr schnell diejenigen Datensätze zu identifizieren, die ein bestimmtes, gesuchtes Token enthalten. Es ist also nicht erforderlich, die Datensätze der Datenbank 102 sequenziell zu durchsuchen.

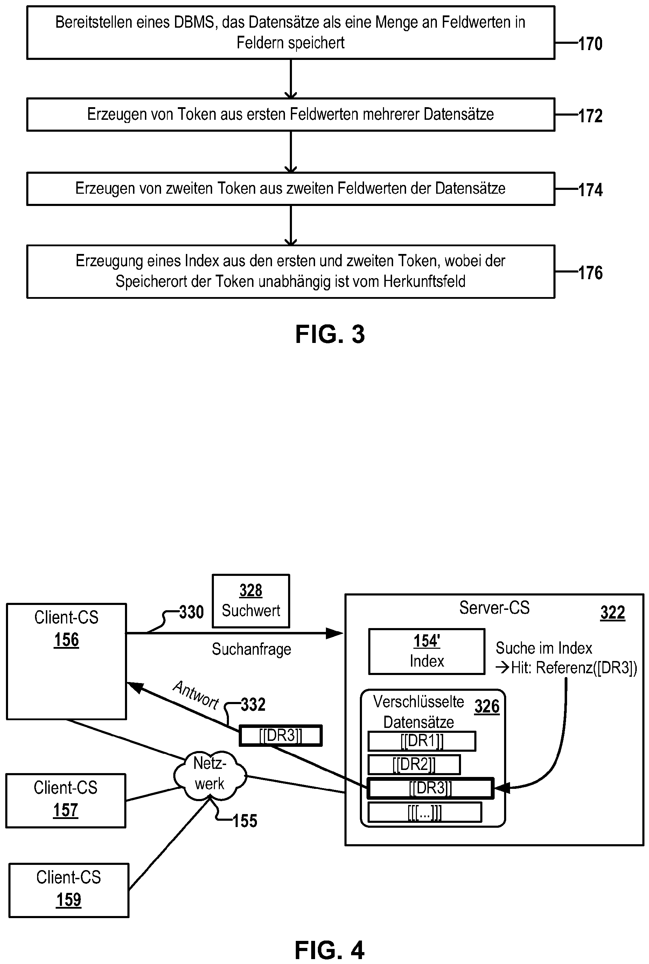

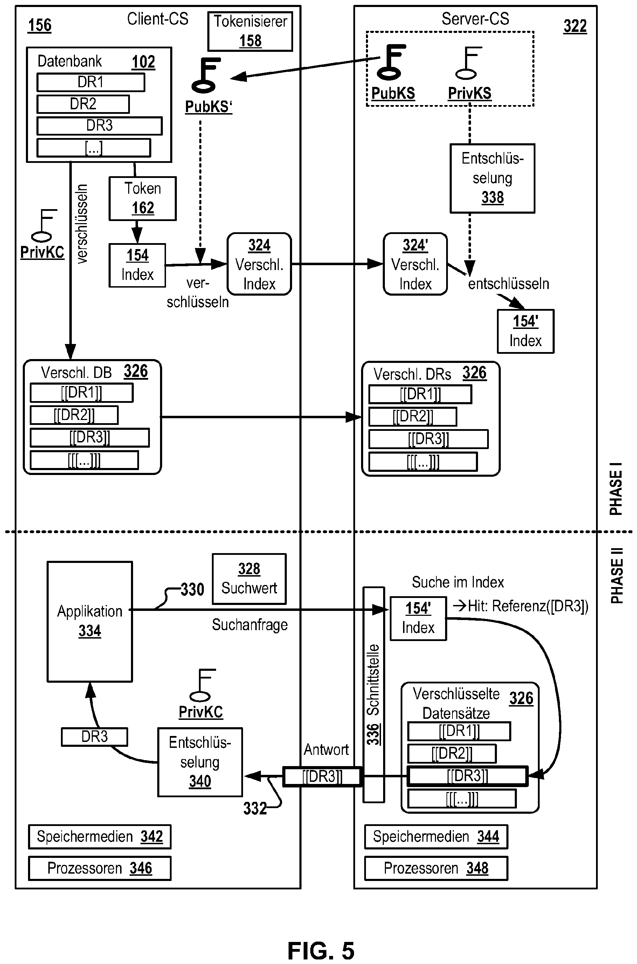

Da vorzugsweise für die Gesamtheit aller Feldwerte aller Datensätze ein einziger Index 154 gebildet wird, unter dieser Index frei ist von Informationen bezüglich der Felder und Feldtypen, denen die einzelnen Token entstammen, da vorzugsweise die Zahl und Zusammensetzung der Feldtypen einzelner Datensätze unterschiedlich ist und vorzugsweise ein oder mehrere Feldtypen Zufallswerte ohne funktionale oder semantische Bedeutung beinhalten, ist es nicht mehr möglich, anhand des Index 154 den Inhalt und die Bedeutung der ursprünglichen Feldwerte bzw. Datensätze ganz oder teilweise zu rekonstruieren. Somit wird ein Index geschaffen, der auch ohne Verschlüsselung gewährleistet, dass die in ihm enthaltenen Informationen von unberechtigten Dritten nicht missbraucht werden können. Dies kann insbesondere vorteilhaft sein beim Einsatz im Kontext von Cloud-Speicherdiensten wie dies zu Figuren 4 und 5 näher ausgeführt wird.

**Figur 2** zeigt beispielhaft die in verschiedenen Feldern zweier Datensätze gespeicherten Feldwerte sowie die aus diesen erzeugten Tokenmengen. So kann beispielsweise der Feldtyp F1 zur Speicherung von Lebensläufen dienen. In Feldern des Feldtyps F1 werden somit häufig natürlich sprachliche Texte mit Bilddaten und optional auch Audiodaten gespeichert. Feldtyp F2 kann zur Speicherung eines Berechtigungsnachweises für ein bestimmtes Gebäude, zum Beispiel in Form eines numerischen Datenwerts, der als Zertifikat dient, ausgebildet sein. Auch die Feldtypen F3 und F4 können zur Speicherung numerischer Datenwerte, die je als Berechtigungsausweise für ein weiteres Gebäude (F3) oder einen bestimmten Raum (F4) dienen, ausgebildet sein. Der Feldtyp F5 ganzer Speicherung biometrischer Daten dienen. Die biometrischen Daten können in Form von Texten, Bildern (zum Beispiel Fingerabdrücke, Irisbilder, etc.), und/oder Videodaten (Bewegungsmuster, etc.) in den Feldern des Feldtyps F5 gespeichert sein. Vorzugsweise haben die Felder der verschiedenen Feldtypen ein generisches Datenformat, das im Prinzip die Speicherung sämtlicher in der Datenbank vorkommender Datenformen (Text, Zahlen, Bilder, Video-, Audio und/oder sonstiger Dateien) zulassen. Dennoch ist es möglich, dass beispielsweise eine Applikationslogik, die die Daten erstellt, alle Daten eines bestimmten semantischen Konzepts (z.B. "Alter", "Geburtstag", "Zugangsberechtigung für Gebäude XY") ein einem speziell hierfür spezifizierten Feld gespeichert werden auch wenn das Feld auch die Speicherung anderer Datenformate unterstützen würde.

Vorzugsweise handelt es sich bei dem Tokenisierer um einen einzigen, generischen Tokenisierer, der auf sämtliche zu tokinisierenden Felder verschiedener Feldtypen angewandt wird. Der Tokenisierer 158 generiert aus dem im ersten Feld des Datensatzes DR1 gespeicherten Feldwert und aus dem im ersten Feld des Datensatzes DR7 gespeicherten Feldwert sowie aus den Feldwerten aller Feldern der anderen Datensätze, die dem Feldtyp F1 zugeordnet sind, eine Mengen an ersten Token 250. Der Tokenisierer 158 generiert zudem aus dem im zweiten Feld des Datensatzes DR1 gespeicherten Feldwert und aus dem im zweiten Feld des Datensatzes DR7 gespeicherten Feldwert sowie aus den Feldwerten aller Feldern der anderen Datensätze, die dem Feldtyp F2 zugeordnet sind, eine Mengen an zweiten Token 252. Dies wird für die Feldwerte sämtlicher Feldtypen F1-F7 durchgeführt, wobei vorzugsweise der gleiche generische Tokenisierer für alle Feldtypen verwendet wird. Die Gesamtheit der für alle Feldtypen generierten Token 250, 252, ..., 254 bildet die Tokenmenge 162.

**Figur 3** zeigt ein Flussdiagramm zur Erzeugung eines Index 154 gemäß einer Ausführungsform. In einem ersten Schritt 170 erfolgt die Bereitstellung eines DBMS 160, zum Beispiel die Instantiierung des DBMS auf einem Computersystem 156. Das DBMS 156 ist dazu konfiguriert, Datensätze DR1-DR7 jeweils als eine Menge aus mehreren Feldwerten strukturiert zu speichern. Dabei wird jeder der Feldwerte jeweils in einem eigenen Feld gespeichert. Die Felder jedes der Datensätze gehören mindestens zwei unterschi der edlichen Feldtypen F1-F7 an.

In Schritt 172 erfolgt die Erzeugung von ersten Token 250 aus ersten Feldwerten mehrerer Datensätze. Wie in Figur 2 beispielhaft gezeigt sind die ersten Feldwerte in ersten Feldern gespeichert. Die ersten Felder gehören einem ersten Feldtyp F1 an.

In Schritt 174 erfolgt die Erzeugung von zweiten Token 252 aus zweiten Feldwerten mehrerer Datensätze. Wie in Figur 2 beispielhaft gezeigt sind die zweiten Feldwerte in zweiten Feldern gespeichert. Die zweiten Felder gehören einem zweiten Feldtyp F2 an. In analoger Weise wird Schritt 172 bzw. 174 wiederholt für die Felder bzw. Feldwerte weiterer Feldtypen F3, ..., F7.

Schließlich erzeugt eine Tokenisierungslogik (zum Beispiel ein generische Tokenisierer 158) in Schritt 176 einen durchsuchbaren Index 154 aus zumindest den ersten Token 250 und den zweiten Token 252 und gegebenenfalls den weiteren für andere Datentypen erzeugten Token 254. Der Ort der Speicherung der ersten und zweiten und der gegebenenfalls weiteren Token 254 in der Struktur des Index erfolgt unabhängig davon, von welchem der Felder die Token stammen.

**Figur 4** zeigt übersichtsartig ein verteiltes System, das ein Server-Computersystem 322 und mehrere Client-Computersysteme 156, 157, 159 umfasst. Die Computersysteme 322, 156, 157, 159 sind über ein Netzwerk 155, z.B. das Internet, miteinander verbunden.

Das Client-Computersystem 156 kann beispielsweise ein Client-Applikationsprogramm beinhalten, welches eine Suchanfrage 330 über das Netzwerk an das Server-Computersystem 322 sendet. Die Suchanfrage beinhaltet einen Suchwert 328, zum Beispiel ein Nutzer-Pseudonym in Form eines Zahlenwertes "3463744".

Das Server -Computersystem 322 kann als ein Cloud-Computersystem ausgebildet sein, welches selbst aus einer Vielzahl miteinander vernetzten und operativ aneinander gekoppelten Ressourcen, insbesondere mehreren Datenspeichergeräten und Prozessoren, besteht. Das Server-Computersystem stellt Datensätze einer Datenbank für eine Vielzahl von berechtigten Client-Computersystemen 156, 157, 159 über das Netzwerk bereit. Die Bereitstellung umfasst das Verfügbarmachen eines Index 154'. Der Index ermöglicht es den Client-Computersystemen, den Inhalt der Datenbank 326 zu durchsuchen sowie Treffer [[DR3]] zu identifizieren und zurückzugeben, obwohl die Datenbank 326 verschlüsselt ist.

Die Speicherung von großen Datenbanken und die Bereitstellung eines entsprechenden Suchindex für eine Vielzahl von Client-Computersystemen stellen oftmals eine erhebliche Anforderung im Hinblick auf die Systemsicherheit, Ausfallsicherheit und Leistungsfähigkeit der Prozessoren und Speicherkomponenten dar. Eine Auslagerung dieser Dienste auf spezialisierte Cloud-Computersysteme ist daher gerade für viele mittelständische Unternehmen von hohem ökonomischen Interesse. Allerdings befinden sich die Daten, die auf Cloud-Rechnern gespeichert sind, oftmals im Ausland und/oder unter der Kontrolle eines Cloud-Dienstanbieters, dem nicht vollständig vertraut wird. Ausführungsformen der Erfindung ermöglichen also die Auslagerung und Speicherung von sensiblen Daten auf Cloud-Dienste in einer Weise, dass diese dennoch über einen Index durchsuchbar sind und an mehrere berechtigte Client-Computersysteme zur Verfügung gestellt werden können, ohne dass die Vertraulichkeit der in dem Cloud-Speicherdienst gespeicherten Daten (Datensätze und Index) gefährdet ist.

**Figur 5** zeigt weitere Details des Server-Computersystems 322 und eines 156 der Client-Computersysteme, gemäß einer weiteren Ausführungsform der Erfindung.

Dem Server-Computersystem ist ein asymmetrisches kryptographisches Schlüsselpaar zugeordnet, welches einen öffentlichen kryptographischen Schlüssel PubKS und einen privaten kryptographischen Schlüssel privKS beinhaltet. Der öffentliche Schlüssel wird in Kopie PubKS' dem Client-Computersystem zur Verfügung gestellt. Dies kann beispielsweise direkt erfolgen, also in dem das Client-Computersystem den Schlüssel direkt von dem Server-Computersystem empfängt. Die Schlüsselübertragung kann aber auch indirekt erfolgen, indem beispielsweise das Server-Computersystem seinen öffentlichen Schlüssel in einer öffentlich einsehbaren Datenbank hinterlegt und das Client-Computersystem den öffentlichen Schlüssel PubKS' von dieser Datenbank herunterlädt. Der private Schlüssel PrivKS dient der Entschlüsselung von Daten, die mit dem öffentlichen Schlüssel PubKS verschlüsselt wurden. Der private Schlüssel PrivKS ist vorzugsweise geschützt gespeichert und nur dem Server-Computersystem, nicht aber einem der Client-Computersysteme zugänglich.

Auch das Client-Computersystem verfügt über einen privaten Schlüssel privKC, der geschützt gespeichert ist, sodass der private Schlüssel PrivKC nur von dem Client-Computersystem 156 (und optional von weiteren, berechtigten Client-Computersystemen 157, 159) gelesen und verwendet werden kann, nicht jedoch vom Server-Computersystem.

Das Client Computersystem beinhaltet eine Tokenisierungslogik 158 und ein DBMS mit einer Datenbank 102 gemäß einer der hier bereits beschriebenen Ausführungsformen.

### Phase I

In einer ersten Phase wird von dem Client-Computersystem ein Index der Datenbank 102 erstellt und der generierte Index 154 sowie die Datensätze der Datenbank 102 verschlüsselt. Bei der Verschlüsselung der Datensätze und des Index werden unterschiedliche kryptografische Schlüssel verwendet.

Vorzugsweise werden die Datensätze einzelnen verschlüsselt, was den Vorteil hat, dass diese auch einzeln in verschlüsselter Form zurückgegeben werden können. Die einzelnen Datensätze werden so verschlüsselt, dass das Client- Computersystem diese wieder entschlüsselt kann, nicht jedoch das Server- Computersystem 322, das die verschlüsselten Datensätze speichern und für ggf. eine Vielzahl an Clients vorhalten soll. Beispielsweise kann der Schlüssel PrivKV ein privater, symmetrischer kryptographische Schlüssel sein, der sowohl zur Verschlüsselung als auch zur Entschlüsselung von Daten verwendet werden kann. Alternativ dazu kann das Client-Computersystem über ein weiteres asymmetrisches kryptographisches Schlüsselpaar verfügen, wobei beide Schlüssel dieses Paares nur dem Client-Computersystem 156 (und gegebenenfalls noch weiteren berechtigten Client-Computersystemen), nicht jedoch dem Server-Computersystem bekannt sind. Ein Schlüssel dieses Paares dient zur Verschlüsselung der Datensätze, der andere Schlüssel des Paares zur Entschlüsselung der verschlüsselten Datensätze 326. Aus dem Datensatz DR1 etwa wird also der verschlüsselte Datensatz [[DR1]]. Aus dem Datensatz DR3 wird also der verschlüsselte Datensatz [[DR3]].

Den Index 154 verschlüsselt das Client-Computersystem 156 dagegen mit dem öffentlichen Schlüssel PubKS des Server-Computers.

Die verschlüsselten Datensätze 326 und der verschlüsselte Index 324 werden von dem Client- Computersystem an das Server- Computersystem übertragen. Dies kann beispielsweise direkt über das Netzwerk 1 von 5, zum Beispiel das Internet, erfolgen. Nach Ausführungsformen erfolgt die Verschlüsselung und Übertragung der Datensätze in regelmäßigen zeitlichen Abständen komplett oder inkrementell, wobei jeweils der Index neu gebildet, neu verschlüsselt und neu übertragen wird.

Der übertragene verschlüsselte Index 324' wird vom Server-Computersystem mittels des privaten Schlüssels PrivKS des Server-Computers entschlüsselt und als eine unverschlüsselte Kopie 154' des Index 154 auf ein oder mehreren Speichermedien 344, die von dem Server-Computersystem verwaltet werden, gespeichert.

Auch die empfangenen und verschlüsselten Datensätze 326 werden auf den Speichermedien 344 gespeichert, ohne diese jedoch zu entschlüsseln, da das Server-Computersystem nicht über die Schlüssel verfügt, die notwendig sind, um die Datensätze zu entschlüsseln.

Das Server-Computersystem stellt eine Schnittstelle 336 bereit, welche es dem Client-Computersystem 156, das den Index und die Datensätze bereitgestellt hat, ermöglicht, auf den Index 154' zuzugreifen. Vorzugsweise ermöglicht die Schnittstelle auch weiteren Client-Computersystemen einen entsprechenden Zugriff auf den Index 154', wobei die weiteren Client-Computersysteme die gegebenenfalls vom Server-Computersystem bereitgestellten verschlüsselten Datensätze nur dann auswerten können, wenn sie ebenfalls über einen geeigneten Entschlüsselungsschlüssel PrivKC verfügen.

Während in der ersten Phase die Generierung Verschlüsselung und Verteilung von Index und Datensätzen beschrieben ist, wird in der zweiten Phase der Ablauf einer beispielhaften Suchanfrage anhand eines Beispiels beschrieben.

### Phase II

Im abgebildeten Beispiel sendet eine Client-Applikation 334, auf dem Client-Computersystem 156 instanziiert ist, eine Suchanfrage 330 über die Schnittstelle 336 an das Server-Computersystem. Die Suchanfrage beinhaltet einen Suchwert 328, zum Beispiel "2654645".

Als Antwort auf den Empfang der Suchanfrage durchsucht das Server-Computersystem den unverschlüsselten Index 154' nach einem Token, das exakt dem Suchwert "2654645" entspricht. Beispielsweise kann der Suchlauf nach diesem Suchwert ein bestimmtes Token innerhalb des Index 154' identifizieren, welches den Datensatz DR3 referenziert. Der Datensatz DR3 liegt auf dem Server-Computersystem nur in verschlüsselter Form [[DR3]] vor. Als Antwort auf die Suchanfrage 330 gibt das Server-Computersystem also den identifizierten, verschlüsselten Datensatz [[DR3]] in einer Antwort-Nachricht 332 an das Client-Computersystem zurück. Eine Entschlüsselungslogik 340 des Client-Computersystems, die Zugriff auf den Entschlüsselung-Schlüssel PrivKC besitzt, entschlüsselt den Datensatz und liefert den entschlüsselten Datensatz DR3 an die Client-Applikationslogik 334 als das Ergebnis der Suchanfrage 330.

Anhand der Abbildung ist ersichtlich, dass für die Phase zwei ein Vorhandensein der Original-Datenbank 102 bzw. ein Vorhandensein der unverschlüsselten Datensätze DR1-DR7 auf dem Client-Computersystem nicht erforderlich ist. Es ist also möglich, dass nur ein bestimmtes Client-Computersystem 156 der Generierung und Verschlüsselung des Index bzw. der Verschlüsselung der Datensätze dient, während eine Vielzahl weiterer Client-Computersysteme 157, 159 ausschließlich Programlogik implementieren, die zur Durchführung der hier in Phase zwei aufgeführten Schritte erforderlich ist. Diese weiteren Client-Computersysteme benötigen also keinen öffentlichen Schlüssel des Servers PubKS und keine Tokenisierungslogik zur Erstellung des Index, benötigen aber eine Client-Applikation 334, eine Entschlüsselungslogik 340 und den entsprechenden Entschlüsselungsschlüssel PrivKC zur Entschlüsselung der Datensätze.

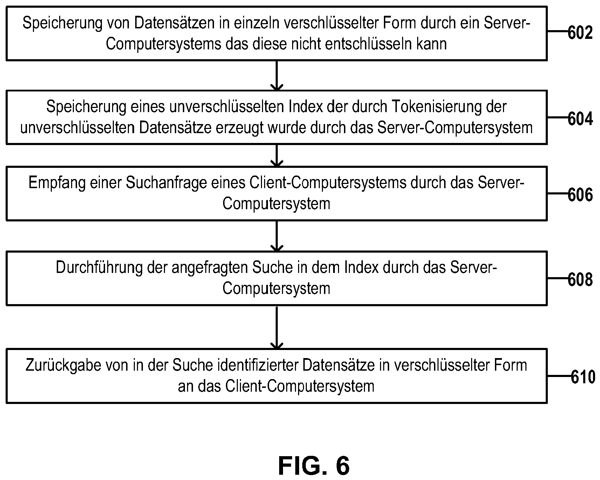

**Figur 6** zeigt ein Flussdiagramm eines computerimplementierten Verfahrens zur Bereitstellung von Datensätzen durch ein Server-Computersystem gemäß einer Ausführungsform der Erfindung.

In einem ersten Schritt 602 speichert ein Server-Computersystem 322 wie etwa in Figuren 4 und 5 dargestellt eine Vielzahl von Datensätzen 326 auf ein Speichermedium 344, auf welches das Server-Computersystem 322 Zugriff hat. Die Datensätze werden in einzeln verschlüsselter Form gespeichert. Bei dem Speichermedium kann es sich um ein oder mehrere physikalische Datenspeichergeräte, z.B. Festlpatten, handeln. Das Server-Computersystem hat weder Zugriff auf die Datensätze in unverschlüsselter Form noch hat es Zugriff auf Mittel zur Entschlüsselung der Datensätze. Das heißt, das Server-Computersystem kann nicht auf den Schlüssel PrivKC oder einen anderen Schlüssel zugreifen, mittels welchem eine Entschlüsselung der Datensätze möglich wäre. Jeder der unverschlüsselten Datensätze beinhaltet ein oder mehrere jeweils in eigenen Feldern gespeicherte Feldwerte, wie dies z.B. in Figuren 1 und 2 exemplarisch veranschaulicht ist. In verschlüsselter Form ist den Datensätzen weder die Art noch die Anzahl noch der Inhalt der Feldwerte eines Datensatzes entnehmbar.

In einem weiteren Schritt 604, der auch vor Schritt 602 erfolgen kann, speichert das Server-Computersystem einen unverschlüsselten Index 154' auf das Speichermedium 344. Der unverschlüsselte Index beinhaltet Token 162, die durch Tokenisierung mehrerer der Feldwerte der unverschlüsselten Datensätze erzeugt wurden. Jedes der in dem Index enthaltenen Token ist mit ein oder mehreren Zeigern auf diejenigen der Datensätze, durch deren Tokenisierung das Token erzeugt wurde, verknüpft. Dabei ist der Index allerdings frei von Zeigern auf einzelne Felder dieser Datensätzen, die das Token beinhalten. Beispielsweise kann der Index von einem Computersystem, welches die Datensätze normalerweise verwaltet und welches den Index generiert hat, in verschlüsselter Form über ein Netzwerk erhalten und vom Server-Computersystem vor der Speicherung entschlüsselt werden.

Nachdem also sowohl die verschlüsselten Datensätze als auch ein zugehöriger, nichtverschlüsselter Index für das Server-Computersystem verfügbar gespeichert vorliegen, kann in einem weiteren Schritt 606 das Server-Computersystem über eine Schnittstelle 336 ein oder mehrere Suchanfragen 330 eines 156 oder mehrerer 157, 159 Client-Computersysteme empfangen. Die Anfragen können vorzugsweise über ein Netzwerk, z.B. das Internet, empfangen werden.

Als Antwort auf die Suchanfrage, führt das Server-Computersystem in Schritt 608 die in der Suchanfrage spezifizierte Suche nach einem Suchwert 328 in dem Index 154' durch um ein oder mehrere der Datensätze [[DR3]] als Ergebnis der Suche zu identifizieren. Schließlich gibt das Server-Computersystem die ein oder mehreren identifizierten und verschlüsselten Datensätze über das Netzwerk in verschlüsselter Form an dasjenige Client-Computersystem zurück von dem die Suchanfrage stammte.

### Bezugszeichenliste

- DR1-DR7: Datensätze
- F1-F7: Typen von Datenfeldern
- 102: Datenbank
- 154: Index
- 154': Kopie von Index 154
- 155: Netzwerk
- 156: (Client-) Computersystem
- 157: Client-Computersystem
- 158: Tokenisierungslogik
- 159: Client-Computersystem
- 160: DBMS
- 162: Token
- 170-176: Schritte
- 250: Menge an ersten Token
- 252: Menge an zweiten Token
- 254: Menge an fünften Token
- 322: Server-Computersystem
- 324: verschlüsselter Index
- 324': Kopie des verschlüsselten Index
- 326: verschlüsselte Datenbank
- 328: Suchwert
- 330: Suchanfrage
- 332: Antwort auf Suchanfrage
- 334: Client-Applikation
- 336: Schnittstelle
- 338: Entschlüsselungslogik des Server-Computersystems
- 340: Entschlüsselungslogik des Client-Computersystems
- 342: Speichermedien
- 344: Speichermedien
- 346: Prozessor(en)
- 348: Prozessor(en)
- 602-610: Schritte
- PubKS: öffentlicher Schlüssel des Server-Computersystems
- PrivKS: privater Schlüssel des Server-Computersystems
- PrivCS: privater Schlüssel des Client-Systems

## Patentansprüche

1. Computerimplementiertes Verfahren zur Bereitstellung von Datensätzen, umfassend:
- Speicherung (602) einer Vielzahl von Datensätzen in einzeln verschlüsselter Form (326) auf ein Speichermedium (344) eines Server-Computersystems (322), wobei das Server-Computersystem keinen Zugriff auf die Datensätze in unverschlüsselter Form (102) und keinen Zugriff auf Mittel zur Entschlüsselung (PrivKC) der Datensätze besitzt, wobei jeder der unverschlüsselten Datensätze ein oder mehrere jeweils in eigenen Feldern gespeicherte Feldwerte beinhaltet;
- Speicherung (604) eines unverschlüsselten Index (154') auf das Speichermedium (344) durch das Server-Computersystem, wobei der unverschlüsselte Index Token (162) umfasst, die durch Tokenisierung mehrerer der Feldwerte der unverschlüsselten Datensätze erzeugt wurden, wobei jedes der in dem Index enthaltenen Token verknüpft ist mit ein oder mehreren Zeigern auf diejenigen der Datensätze, durch deren Tokenisierung das Token erzeugt wurde, wobei der Index frei ist von Zeigern auf einzelne Felder dieser Datensätze, die das Token beinhalten;
- Empfang (606) einer Suchanfrage (330) eines Client-Computersystems (156) über ein Netzwerk (155) durch das Server-Computersystem;
- Als Antwort auf die Suchanfrage, Durchführung (608) der angefragten Suche in dem Index (154') durch das Server-Computersystem um ein oder mehrere der Datensätze ([[DR3]]) als Ergebnis der Suche zu identifizieren; und
- Zurückgabe (610) der identifizierten ein oder mehreren Datensätze in verschlüsselter Form an das Client-Computersystem über das Netzwerk.

2. Das computerimplementierte Verfahren nach Anspruch 1, wobei die Suchanfrage einen Suchwert (328) beinhaltet und wobei die Durchführung der angefragten Suche umfasst:
- Durchsuchen des Index (154') nach dem Suchwert;
- Identifizierung eines indizierten Tokens innerhalb des Index, welches identisch ist zu dem Suchwert;
- Analyse von Datensatz-Zeigern, die in dem Index mit dem identifizierten Token verknüpft gespeichert sind, um ein oder mehrere der Datensätze zu identifizieren, welche ein oder mehrere Feldwerte beinhalten, aus welchen das indizierte Token erzeugt wurde, wobei die identifizierten Datensätze zurückgegeben werden.

3. Das computerimplementierte Verfahren nach einem der vorigen Ansprüche, ferner umfassend:
- Bereitstellen (170) eines DBMS (160), wobei das DBMS dazu konfiguriert ist, die Datensätze (DR1-DR7) in unverschlüsselter Form jeweils als eine Menge aus mehreren Feldwerten strukturiert zu speichern, wobei die Feldwerte jeweils in einem Feld gespeichert werden, wobei die Felder jedes der Datensätze mindestens zwei unterschiedlichen Feldtypen (F1-F7) angehören.

4. Das computerimplementierte Verfahren nach einem der vorigen Ansprüche, wobei das Client-Computersystem Zugriff auf die unverschlüsselten Datensätze hat, ferner umfassend:
- Erzeugung der verschlüsselten Datensätze durch das Client-Computersystem (156), wobei die Datensätze jeweils einzeln so verschlüsselt werden, dass das Client-Computersystem diese wieder entschlüsseln kann, nicht jedoch das Server-Computersystem (322);
- Generierung einer ersten Instanz (154) des Index durch das Client-Computersystem durch Tokenisierung der Feldwerte mehrerer Datenfelder der unverschlüsselten Datensätze (102);
- Verschlüsselung der ersten Instanz (154) des Index mit einem öffentlichen Schlüssel (PubKS) des Server-Computers durch das Client-Computersystem um einen verschlüsselten Index (324) zu generieren;
- Senden der verschlüsselten Datensätze (326) und des verschlüsselten Index (324) von dem Client- Computersystem an das Server- Computersystem über das Netzwerk (155).

5. Das computerimplementierte Verfahren nach Anspruch 4, ferner umfassend:
- Empfang des verschlüsselten Index durch das Server- Computersystem von dem Client-Computersystem;
- Empfang des verschlüsselten Datensätze durch das Server- Computersystem von dem Client-Computersystem;
- Entschlüsselung (338) des verschlüsselten Index mittels eines privaten Schlüssels (PrivKS) des Server-Computers zur Bereitstellung des unverschlüsselten Index (154'), wobei der private Schlüssel (PrivKS) und der öffentliche Schlüssel (PubKS) des Server-Computers ein asymmetrisches kryptographisches Schlüsselpaar bilden;
- Speichern der verschlüsselten Datensätze durch das Server- Computersystem.

6. Das computerimplementierte Verfahren nach einem der vorigen Ansprüche, wobei das Server-Computersystem eine Schnittstelle (336) beinhaltet die es einem Client-Computersystem und optional einer Vielzahl weiterer Client-Computersysteme ermöglicht, eine Suchanfrage an das Server-Computersystem zu senden und dieses zu veranlassen, bei der Verarbeitung der Suchanfrage auf den entschlüsselten Index zuzugreifen und ein oder mehreren anhand der Indexsuche identifizierte, verschlüsselten Datensätze über das Netzwerk an das Computersystem, von welchem die Anfrage stammt, zurückzugeben.

7. Das computerimplementierte Verfahren nach einem der vorigen Ansprüche, ferner umfassend:
- Empfang der ein oder mehreren identifizierten und verschlüsselten Datensätze durch das Client-Computersystem; und
- Entschlüsselung (340) der empfangenen verschlüsselten Datensätze durch das Client-Computersystem.

8. Das computerimplementierte Verfahren nach einem der vorigen Ansprüche, wobei jedes der Felder ein Bereich auf einem logischen oder physikalischem Datenträger bezeichnet, der von einem DBMS verwaltet wird, wobei der Speicherbereich einem vordefinierten Feldtyp zugeordnet ist und der zur Speicherung eines Feldwertes eines Datensatzes angelegt und bestimmt ist, ferner umfassend eine Generierung des durchsuchbaren Index (154), wobei die Generierung umfasst:
- Erzeugen (172) von ersten Token (250) aus ersten Feldwerten mehrerer der unverschlüsselten Datensätze, wobei die ersten Feldwerte in ersten der Felder gespeichert sind, wobei die ersten Felder einem ersten Feldtyp (F1) angehören;
- Erzeugen (174) von zweiten Token (252, 254) aus zweiten Feldwerten der mehreren unverschlüsselten Datensätze, wobei die zweiten Feldwerte in zweiten der Felder gespeichert sind, wobei die zweiten Felder einem zweiten Feldtyp (F2, F5) angehören;
- Erzeugung (176) des durchsuchbaren Index (154) aus zumindest den ersten und zweiten Token, wobei der Ort der Speicherung der ersten und zweiten Token in der Struktur des Index unabhängig davon erfolgt von welchem der Felder die Token stammen.

9. Das computerimplementierte Verfahren nach Anspruch 8,
- wobei die Erzeugung der ersten Token umfasst eine Anwendung einer Tokenisierungslogik (158) auf einen der ersten Feldwerte zur Erzeugung mehrerer der ersten Token aus diesem ersten Feldwert; und
- wobei die Erzeugung der zweiten Token umfasst eine Anwendung dieser oder einer anderen Tokenisierungslogik (158) auf einen der zweiten Feldwerte zur Erzeugung mehrerer der zweiten Token aus diesem zweiten Feldwert.

10. Das computerimplementierte Verfahren nach einem der vorigen Ansprüche, ferner mit:
- Speichern der Datensätze in einer durch das DBMS verwalteten Datenbank, wobei die Feldwerte jedes Datensatzes jeweils in ein eigenes Feld gespeichert werden, wobei im Zuge der Speicherung das DBMS für jeden der Datensätze ein Zufallswert generiert und als Feldwert in ein vordefiniertes Zufallswert-Feld gespeichert wird; und
- Verwenden der in den Zufallswert-Feldern gespeicherten Zufallswerte als weitere Token bei der Erzeugung des Index, sodass die Zufallswerte zu indexierten Token werden, wobei der Ort der Speicherung der ersten und zweiten Token und der Zufallswert-Token in der Struktur des Index unabhängig davon erfolgt von welchem der Felder die Token stammen.

11. Das computerimplementierte Verfahren nach Anspruch 8, wobei der erste Feldtyp und der zweite Feldtyp ein gemeinsames, generisches Datenformat besitzen welches die Speicherung von Feldwerten erlaubt, die sowohl Textdaten als auch zumindest Bilddaten, Audiodaten und/oder Videodaten beinhalten und wobei eine zur Tokenisierung verwendete Tokenisierungslogik ein Volltextindizierer ist welcher dazu konfiguriert ist, Texte in Wörter zu zerlegen und die Wörter als Token auszugeben.

12. Server-Computersystem (322), umfassend:
- ein oder mehrere Speichermedien (344) beinhaltend:
∘ eine Vielzahl von Datensätzen in einzeln verschlüsselter Form (326), wobei das Server-Computersystem keinen Zugriff auf die Datensätze in unverschlüsselter Form (102) und keinen Zugriff auf Mittel zur Entschlüsselung (PrivKC) der Datensätze besitzt, wobei jeder der unverschlüsselten Datensätze ein oder mehrere jeweils in eigenen Feldern gespeicherte Feldwerte beinhaltet;
∘ einen unverschlüsselten Index (154'), wobei der unverschlüsselte Index Token (162) umfasst, die durch Tokenisierung mehrerer der Feldwerte der unverschlüsselten Datensätze erzeugt wurden, wobei jedes der in dem Index enthaltenen Token verknüpft ist mit ein oder mehreren Zeigern auf diejenigen der Datensätze, durch deren Tokenisierung das Token erzeugt wurde, wobei der Index frei ist von Zeigern auf einzelne Felder dieser Datensätze, die das Token beinhalten;
- eine Schnittstelle (336) die konfiguriert ist zum:
o Empfang einer Suchanfrage (330) eines Client-Computersystems (156) über ein Netzwerk (155);
o als Antwort auf die Suchanfrage, Durchführung der angefragten Suche in dem Index (154')um ein oder mehrere der verschlüsselten Datensätze ([[DR3]]) als Ergebnis der Suche zu identifizieren; und
o Zurückgabe der identifizierten ein oder mehreren verschlüsselten Datensätze in verschlüsselter Form an das Client-Computersystem über das Netzwerk.

13. Server-Computersystem nach Anspruch 12, wobei das Server-Computersystem konfiguriert ist zu:
- Empfang des Index in verschlüsselter Form über das Netzwerk, wobei der verschlüsselte Index mittels eines öffentlichen Schlüssels des Server- Computersystems verschlüsselt wurde;
- Entschlüsselung des empfangenen verschlüsselten Index (324) mittels eines privaten Schlüssels (PrivKS) des Server- Computersystems, wobei der private und der öffentlicher Schlüssel des Server- Computersystems ein asymmetrisches kryptographisches Schlüsselpaar bilden;
- Speichern des entschlüsselten Index (154'); und
- Empfang der verschlüsselten Datensätze (326) über das Netzwerk und Speichern der verschlüsselten Datensätze.

14. Client-Computersystem (156) umfassend eine Schnittstelle und ein oder mehrere Datenspeichermedien (342), in welchen die Datensätze unverschlüsselt gespeichert sind, wobei die Datensätze (DR1-DR7) jeweils eine Menge aus mehreren Feldwerten umfassen, wobei die Feldwerte einzeln jeweils in einem Feld gespeichert werden;
wobei das Client-Computersystem konfiguriert ist zur:
- Generierung eines Index aus den unverschlüsselten Datensätzen;
- Verschlüsselung des Index mit einem öffentlichen Schlüssel eines Server-Computersystems (322);
- Nach der Generierung des Index, Verschlüsselung der Datensätze jeweils einzeln so, dass das Client-Computersystem diese wieder entschlüsselt kann, nicht jedoch das Server-Computersystem;
- Senden der verschlüsselten Datensätze (326) und des verschlüsselten Index (324) von dem Client- Computersystem an das Server- Computersystem über ein Netzwerk;
wobei die Schnittstelle konfiguriert ist zum:
- Senden einer Suchanfrage mit einem Suchwert an eine Schnittstelle (336) des Server-Computersystems über das Netzwerk, wobei der Suchwert unverschlüsselt ist und wobei der Suchwert ein Token ist, das durch Tokenisierung von Feldwerten ein oder mehrerer der unverschlüsselten Datensätze erzeugbar ist, wobei die Suchanfrage ein Durchsuchen des unverschlüsselten Index durch das Server-Computersystem bewirkt, wobei der Index durch Tokenisierung von Feldwerten der unverschlüsselten Datensätze erzeugt wurde;
- Empfang einer oder mehrerer Datensätze in verschlüsselter Form von dem Server-Computersystem als Antwort auf die Suchanfrage;
- Entschlüsselung der empfangenen ein oder mehreren verschlüsselten Datensätze mit einem privaten Schlüssel (PrivKC) der unzugänglich für das Server-Computersystem ist.

## Claims

1. Computer-implemented method for providing data records, comprising:
- storing (602) a plurality of data records in individually encrypted form (326) on a storage medium (344) of a server computer system (322), wherein the server computer system does not have access to the data records in unencrypted form (102) and does not have access to means for decrypting (PrivKC) the data records, wherein each of the unencrypted data records contains one or more field values each stored in their own fields;
- storing (604) an unencrypted index (154') on the storage medium (344) by means of the server computer system, wherein the unencrypted index comprises tokens (162) which have been generated by tokenization of a plurality of the field values of the unencrypted data records, wherein each of the tokens contained in the index is linked to one or more pointers to those data records of which the tokenization has generated the token, wherein the index is free of pointers to individual fields of these data records which contain the token;
- receiving (606) a search request (330) of a client computer system (156) over a network (155) by means of the server computer system;
- as a response to the search request, performing (608) the requested search in the index (154') by means of the server computer system to identify one or more of the data records ([[DR3]]) as a result of the search; and
- returning (610) the one or more identified data records in encrypted form to the client computer system over the network.

2. Computer-implemented method according to claim 1, wherein the search request contains a search value (328) and wherein performing the requested search comprises:
- searching the index (154') for the search value;
- identifying an indexed token within the index which is identical to the search value;
- analyzing data-record pointers that are stored in the index so as to be linked to the identified token in order to identify one or more of the data records which contain one or more field values from which the indexed token has been generated, wherein the identified data records are returned.

3. Computer-implemented method according to any one of the preceding claims, further comprising:
- providing (170) a DBMS (160), wherein the DBMS is configured to store the data records (DR1-DR7) in unencrypted form as a set of a plurality of field values in a structured manner in each case, wherein the field values are each stored in one field, wherein the fields of each of the data records belong to at least two different field types (F1-F7).

4. Computer-implemented method according to any one of the preceding claims, wherein the client computer system has access to the unencrypted data records, further comprising:
- generating the encrypted data records by means of the client computer system (156), wherein the data records are each encrypted individually such that the client computer system, but not the server computer system (322), can decrypt them again;
- generating a first instance (154) of the index by means of the client computer system by tokenization of the field values of a plurality of data fields of the unencrypted data records (102);
- encrypting the first instance (154) of the index with a public key (PubKS) of the server computer by means of the client computer system to generate an encrypted index (324);
- sending the encrypted data records (326) and the encrypted index (324) from the client computer system to the server computer system over the network (155).

5. Computer-implemented method according to claim 4, further comprising:
- receiving the encrypted index from the client computer system by means of the server computer system;
- receiving the encrypted data records from the client computer system by means of the server computer system;
- decrypting (338) the encrypted index by means of a private key (PrivKS) of the server computer to provide the unencrypted index (154'), wherein the private key (PrivKS) and the public key (PubKS) of the server computer form an asymmetric cryptographic key pair;
- storing the encrypted data records by means of the server computer system.

6. Computer-implemented method according to any one of the preceding claims, wherein the server computer system contains an interface (336) which allows a client computer system and optionally a plurality of further client computer systems to send a search request to the server computer system and to prompt it, when processing the search request, to access the decrypted index and to return one or more encrypted data records identified on the basis of the index search over the network to the computer system from which the request originated.

7. Computer-implemented method according to any one of the preceding claims, further comprising:
- receiving the one or more identified and encrypted data records by means of the client computer system; and
- decrypting (340) the received encrypted data records by means of the client computer system.

8. Computer-implemented method according to any one of the preceding claims, wherein each of the fields denotes an area on a logical or physical data medium managed by a DBMS, wherein the memory area is assigned to a predefined field type and is created and intended to store a field value of a data record, further comprising generating the searchable index (154), wherein the generating comprises:
- generating (172) first tokens (250) from first field values of a plurality of the unencrypted data records, wherein the first field values are stored in first fields of the fields, wherein the first fields belong to a first field type (F1);
- generating (174) second tokens (252, 254) from second field values of the plurality of unencrypted data records, wherein the second field values are stored in second fields of the fields, wherein the second fields belong to a second field type (F2, F5);
- generating the searchable index (154) from at least the first and second token, wherein the storage location of the first and second tokens in the structure of the index is irrespective of which of the fields the tokens originate from.

9. Computer-implemented method according to claim 8,
- wherein generating the first tokens comprises applying a tokenization logic (158) to one of the first field values for generating a plurality of the first tokens from this first field value; and
- wherein generating the second tokens comprises applying this or another tokenization logic (158) to one of the second field values for generating a plurality of the second tokens from this second field value.

10. Computer-implemented method according to any one of the preceding claims, further comprising:
- storing the data records in a database managed by the DBMS, wherein the field values of each data record are each stored in their own field, wherein, during the storage, the DBMS generates a random value for each of the data records, which is stored as a field value in a predefined random value field; and
- using the random values stored in the random value fields as further tokens when generating the index such that the random values become indexed tokens, wherein the storage location of the first and second tokens and the random value tokens in the structure of the index is irrespective of which of the fields the tokens originate from.

11. Computer-implemented method according to claim 8, wherein the first field type and the second field type have a common, generic data format which allows field values to be stored which contain both text data and at least image data, audio data, and/or video data, and wherein a tokenization logic used for the tokenization is a full-text indexer configured to break text down into words and to output the words as tokens.

12. Server computer system (322), comprising:
- one or more storage media (344) containing:
∘ a plurality of data records in individually encrypted form (326), wherein the server computer system does not have access to the data records in unencrypted form (102) and does not have access to means for decrypting (PrivKC) the data records, wherein each of the unencrypted data records contains one or more field values each stored in their own fields;
∘ an unencrypted index (154'), wherein the unencrypted index comprises tokens (162) which have been generated by tokenization of a plurality of the field values of the unencrypted data records, wherein each of the tokens contained in the index is linked to one or more pointers to those data records of which the tokenization has generated the token, wherein the index is free of pointers to individual fields of these data records which contain the token;
- an interface (336) configured:
∘ to receive a search request (330) of a client computer system (156) over a network (155);
∘ as a response to the search request, to perform the requested search in the index (154') to identify one or more of the encrypted data records ([[DR3]]) as a result of the search; and
∘ to return the one or more identified encrypted data records in encrypted form to the client computer system over the network.

13. Server computer system according to claim 12, wherein the server computer system is configured:
- to receive the index in encrypted form over the network, wherein the encrypted index has been encrypted by means of a public key of the server computer system;
- to decrypt the received encrypted index (324) by means of a private key (PrivKS) of the server computer system, wherein the private and the public key of the server computer form an asymmetric cryptographic key pair;
- to store the decrypted index (154'); and
- to receive the encrypted data records (326) over the network and to store the encrypted data records.

14. Client computer system (156) comprising an interface and one or more data memory media (342), in which the data records are stored in an unencrypted manner, wherein the data records (DR1-DR7) each comprise a set of a plurality of field values, wherein the field values are individually each stored in a field;
wherein the client computer system is configured:
- to generate an index from the unencrypted data records;
- to encrypt the index with a public key of a server computer system (322);
- after generating the index, to encrypt each of the data records individually such that the client computer system, but not the server computer system, can decrypt them again;
- to send the encrypted data records (326) and the encrypted index (324) from the client computer system to the server computer system over a network;
wherein the interface is configured:
- to send a search request containing a search value to an interface (336) of the server computer system over the network, wherein the search value is unencrypted and wherein the search value is a token which can be generated by tokenization of field values of one or more of the unencrypted data records, wherein the search request causes the server computer system to search the unencrypted index, wherein the index has been generated by tokenization of field values of the unencrypted data records;
- to receive one or more data records in encrypted form from the server computer system as a response to the search request;
- to decrypt the one or more encrypted received data records with a private key (PrivKC) which is inaccessible to the server computer system.

## Revendications

1. Procédé mis en oeuvre par ordinateur destiné à la fourniture d'ensembles de données comprenant :
- l'enregistrement (602) d'une multiplicité d'ensembles de données sous forme chiffrée individuellement (326) sur un support de stockage (344) d'un système informatique serveur (322), dans lequel le système informatique serveur ne possède pas d'accès aux ensembles de données sous forme non chiffrée (102) et pas d'accès à des moyens permettant le déchiffrement (PrivKC) des ensembles de données, dans lequel chaque ensemble parmi les ensembles de données non chiffrés contient une ou plusieurs valeurs de champ enregistrées respectivement dans des champs propres ;
- l'enregistrement (604) d'un index (154') non chiffré sur le support de stockage (344) par le système informatique serveur, dans lequel l'index non chiffré comprend des jetons (162) qui ont été créés par tokénisation de plusieurs parmi les valeurs de champ des ensembles de données non chiffrés, dans lequel chacun des jetons contenus dans l'index est combiné avec un ou plusieurs indicateurs sur les ensembles de données en question par la tokénisation desquels le jeton a été créé, dans lequel l'index est exempt d'indicateurs vers des champs individuels de ces ensembles de données qui contiennent le jeton ;
- la réception (606) d'une requête de recherche (330) d'un système informatique client (156) par le biais d'un réseau (155) par le système informatique serveur ;
- en réponse à la requête de recherche, l'exécution (608) de la recherche demandée dans l'index (154') par le système informatique serveur afin d'identifier un ou plusieurs parmi les ensembles de données ([[DR3]]) en tant que résultat de la recherche ; et
- la restitution (610) du ou des ensembles de données identifiés sous forme chiffrée au système informatique client par le biais du réseau.

2. Procédé mis en oeuvre par ordinateur selon la revendication 1, dans lequel la requête de recherche contient une valeur de recherche (328) et dans lequel l'exécution de la recherche demandée comprend :
- l'exploration de l'index (154') pour trouver la valeur de recherche ;
- l'identification d'un jeton indexé au sein de l'index, lequel est identique à la valeur de recherche ;
- l'analyse des indicateurs d'ensembles de données qui sont enregistrés dans l'index combinés avec le jeton identifié afin d'identifier un ou plusieurs parmi les ensembles de données, lesquels contiennent une ou plusieurs valeurs de champ à partir desquelles le jeton indexé a été créé, dans lequel les ensembles de données identifiés sont restitués.

3. Procédé mis en oeuvre par ordinateur selon l'une des revendications précédentes, comprenant en outre :
- la fourniture (170) d'un DBMS (160), dans lequel le DBMS est conçu pour enregistrer les ensembles de données (DR1 à DR7) sous forme non chiffrée respectivement sous forme d'une quantité de plusieurs valeurs de champ à l'état structuré, dans lequel les valeurs de champ sont respectivement enregistrées dans un champ, dans lequel les champs de chacun des ensembles de données font partie d'au moins deux types de champs (F1 à F7) différents.

4. Procédé mis en oeuvre par ordinateur selon l'une des revendications précédentes, dans lequel le système informatique client a accès aux ensembles de données non chiffrés, comprenant en outre :
- la création des ensembles de données chiffrés par le système informatique client (156), où les ensembles de données sont chiffrés individuellement de telle manière que le système informatique client puisse de nouveau les déchiffrer, tandis que le système informatique serveur (322) ne le peut pas ;
- la génération d'une première instance (154) de l'index par le système informatique client par une tokénisation des valeurs de champ de plusieurs champs de données des ensembles de données non chiffrés (102) ;
- le chiffrement de la première instance (154) de l'index avec une clé publique (PubKS) du système informatique serveur par le système informatique client afin de générer un index (324) chiffré ;
- l'envoi des ensembles de données chiffrés (326) et de l'index chiffré (324) du système informatique client vers le système informatique serveur par le biais du réseau (155).

5. Procédé mis en oeuvre par ordinateur selon la revendication 4, comprenant en outre :
- la réception de l'index chiffré par le système informatique serveur à partir du système informatique client ;
- la réception des ensembles de données chiffrés par le système informatique serveur à partir du système informatique client ;
- le déchiffrement (338) de l'index chiffré au moyen d'une clé privée (PrivKS) du système informatique serveur permettant la fourniture de l'index non chiffré (154'), où la clé privée (PrivKS) et la clé publique (PubKS) de l'ordinateur serveur forment une paire de clés cryptographiques asymétrique ;
- l'enregistrement des ensembles de données chiffrés par le système informatique serveur.

6. Procédé mis en oeuvre par ordinateur selon l'une des revendications précédentes, dans lequel le système informatique serveur contient une interface (336) qui permet à un système informatique client et éventuellement, à une multiplicité d'autres systèmes informatiques clients, d'envoyer une requête de recherche au système informatique serveur et faire en sorte que celui-ci accède à l'index déchiffré lors du traitement de la requête de recherche et restitue un ou plusieurs ensembles de données identifiés à l'aide de la recherche d'index chiffré par le biais du réseau vers le système informatique à partir duquel la demande est originaire.

7. Procédé mis en oeuvre par ordinateur selon l'une des revendications précédentes, comprenant en outre :
- la réception de l'ensemble ou des ensembles de données identifiés et chiffrés par le système informatique client ; et
- le déchiffrement (340) des ensembles de données chiffrés reçus par le système informatique client.

8. Procédé mis en oeuvre par ordinateur selon l'une des revendications précédentes, dans lequel chacun des champs désigne une zone sur un support de données numérique ou physique qui est géré par un DBMS, où la zone de mémoire est associée à un type de champ prédéfini et qui est établie et déterminée pour l'enregistrement d'une valeur de champ d'un ensemble de données, comprenant en outre une génération de l'index (154) consultable, où la génération comprend :
- la création (172) de premiers jetons (250) à partir de valeurs de champ de plusieurs parmi les ensembles de données non chiffrés, où les premières valeurs de champ sont enregistrées dans des premiers parmi les champs, où les premiers champs font partie d'un premier type de champ (F1) ;
- la création (174) de deuxièmes jetons (252, 254) à partir de deuxièmes valeurs de champ de plusieurs parmi les ensembles de données non chiffrés, où les deuxièmes valeurs de champ sont enregistrées dans des deuxièmes parmi les champs, où les deuxièmes champs font partie d'un deuxième type de champ (F2, F5) ;
- la création (176) de l'index consultable (154) à partir au moins des premiers et deuxièmes jetons, où le lieu d'enregistrement des premiers et deuxièmes jetons dans la structure de l'index a lieu indépendamment du champ d'où sont originaires les jetons.

9. Procédé mis en oeuvre par ordinateur selon la revendication 8,
- dans lequel la création des premiers jetons comprend une application d'une logique de tokénisation (158) pour une des premières valeurs de champ pour la création de plusieurs parmi les premiers jetons à partir de cette première valeur de champ ; et
- dans lequel la création des deuxièmes jetons comprend une application de cette logique de tokénisation (158) ou d'une autre pour une des deuxièmes valeurs de champ pour la création de plusieurs parmi les deuxièmes jetons à partir de cette deuxième valeur de champ.

10. Procédé mis en oeuvre par ordinateur selon l'une des revendications précédentes, avec, en outre :
- l'enregistrement des ensembles de données dans une banque de données gérée par le DBMS, où les valeurs de champ de chaque ensemble de données sont respectivement enregistrées dans un champ propre, où, dans le cadre de l'enregistrement, le DBMS, pour chacun des ensembles de données, génère une valeur aléatoire et l'enregistre en tant que champ de valeur dans un champ de valeur aléatoire prédéfini ; et
- l'emploi des valeurs aléatoires enregistrées dans les champs de valeurs aléatoires en tant que nouveaux jetons lors de la création de l'index, de sorte que les valeurs aléatoires deviennent des jetons indexés, où le lieu de l'enregistrement des premiers et deuxièmes jetons et du jeton de la valeur aléatoire a lieu dans la structure de l'index de manière indépendante du champ duquel sont originaires les jetons.

11. Procédé mis en oeuvre par ordinateur selon la revendication 8, dans lequel le premier type de champ et le deuxième type de champ possèdent un format de données commun générique, lequel permet l'enregistrement de valeurs de champ qui contiennent aussi bien des données de texte et également au moins des données d'images, des données audio, et/ou des données vidéo, et où une logique de tokénisation employée pour la tokénisation est un indexeur de texte intégral, lequel est conçu pour dissocier des textes en mots et éditer les mots en tant que jetons.

12. Système informatique serveur (322) comprenant :
- un ou plusieurs supports de stockage (344) contenant :
∘ une multiplicité d'ensembles de données sous forme chiffrée individuellement (326), où le système informatique serveur ne possède aucun accès aux ensembles de données sous forme non chiffrée (102) et aucun accès à des moyens permettant le déchiffrement (PrivKC) des ensembles de données, où chacun des ensembles de données non chiffrés contient respectivement des valeurs de champ enregistrées dans des champs propres ;
∘ un index non chiffré (154'), où l'index non chiffré comprend des jetons (162) qui ont été créés par tokénisation de plusieurs parmi les valeurs de champ des ensembles de données non chiffrés, où chacun des jetons contenus dans l'index est combiné avec un ou plusieurs indicateurs des ensembles de données en question par la tokénisation desquels le jeton a été créé, où l'index est exempt d'indicateurs de champs individuels de ces ensembles de données qui contiennent le jeton ;
- une interface (336) qui est conçue pour :
∘ la réception d'une requête de recherche (330) d'un système informatique client (156) par le biais d'un réseau (155) ;
∘ en tant que réponse à la requête de recherche, l'exécution de la recherche demandée dans l'index (154') pour identifier un ou plusieurs des ensembles de données chiffrés ([[DR3]]) en tant que résultat de la recherche ; et
∘ la restitution de l'ensemble ou des ensembles de données chiffrés identifiés sous forme chiffrée au système informatique client par le biais du réseau.

13. Système informatique serveur selon la revendication 12, le système informatique serveur étant conçu pour :
- la réception de l'index sous forme chiffrée par le biais du réseau, où l'index chiffré a été chiffré au moyen d'une clé publique du système informatique serveur ;
- le déchiffrement de l'index chiffré (324) reçu au moyen d'une clé privée (PrivKS) du système informatique serveur, où la clé privée et la clé publique du système informatique serveur forment une paire de clés cryptographiques asymétrique ;
- l'enregistrement de l'index déchiffré (154') ; et
- la réception des ensembles de données chiffrés (326) par le biais du réseau et l'enregistrement des ensembles de données chiffrés.

14. Système informatique client (156) comprenant une interface et un ou plusieurs supports de stockage de données (342) dans lesquels les ensembles de données sont enregistrés non chiffrés, où les ensembles de données (DR1 à DR7) comprennent respectivement une quantité à base de plusieurs valeurs de champ, où les valeurs de champs sont enregistrées respectivement dans un champ ; le système informatique client étant conçu pour :
- la génération d'un index à partir des ensembles de données non chiffrés ;
- le chiffrement de l'index avec une clé publique d'un système informatique serveur (322) ;
- après la génération de l'index, le chiffrement des ensembles de données de manière respectivement individuelle de sorte que le système informatique client puisse de nouveau les déchiffrer, tandis que le système informatique serveur ne le peut pas ;
- l'envoi des ensembles de données chiffrés (326) et de l'index chiffré (324) du système informatique client au système informatique serveur par le biais d'un réseau ;
dans lequel l'interface est conçue pour :
- l'envoi d'une requête de recherche avec une valeur à rechercher à une interface (336) du système informatique serveur par le biais du réseau, où la valeur à rechercher est non chiffrée et où la valeur à rechercher est un jeton qui peut être créé par tokénisation de valeurs de champs d'un ou de plusieurs parmi les ensembles de données non chiffrés, où la requête de recherche provoque une exploration de l'index non chiffré par le système informatique server, où l'index a été créé par tokénisation de valeurs de champs des ensembles de données non chiffrés ;
- la réception d'un ou de plusieurs ensembles de données sous forme chiffrée par le système informatique serveur en tant que réponse à la requête de recherche ;
- le déchiffrement de l'ensemble ou des ensembles de données chiffrés reçus avec une clé privée (PrivKC) qui est inaccessible pour le système informatique serveur.
